(19) Europäisches Patentamt
European Patent Office
Office européen des brevets

(11) Publication number: **0 062 406**
**B1**

# (12) EUROPEAN PATENT SPECIFICATION

(45) Date of publication of patent specification: **05.06.85**

(51) Int. Cl.$^4$: **C 08 K 5/00,** C 08 L 27/06

(21) Application number: **82300979.0**

(22) Date of filing: **25.02.82**

## (54) Polymer stabilising compositions, polymers stabilised therewith and shaped articles formed from such polymers.

(30) Priority: **26.02.81 US 238517**
**04.02.82 US 345822**

(43) Date of publication of application:
**13.10.82 Bulletin 82/41**

(45) Publication of the grant of the patent:
**05.06.85 Bulletin 85/23**

(84) Designated Contracting States:
**AT BE CH DE FR GB IT LI NL SE**

(56) References cited:
**US-A-4 043 957**

(73) Proprietor: **MORTON THIOKOL, INC.**
**110 North Wacker Drive**
**Chicago Illinois 60606 (US)**

(72) Inventor: **Kugele, Thomas G.**
**6026 Colter Avenue**
**Cincinnati Ohio 45230 (US)**

(74) Representative: **Warren, Anthony Robert et al**
**BARON & WARREN 18 South End Kensington**
**London W8 5BU (GB)**

**EP 0 062 406 B1**

*Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).*

Courier Press, Leamington Spa, England.

**Description**

This invention relates to new and useful polymer stabilizer compositions comprising: 1) an organic tin compound or mixture of organic tin compounds, 2) an organic compound having an aromatic ring which is substituted with a hydroxyl (—OH) group and a mercapto (—SH) group ortho to each other and, optionally, 3) an organotin mercaptide or mixture of organotin mercaptides. This invention also relates to polymer compositions comprising: 1) an organic polymer, more particularly a halogenated organic polymer, 2) an organic tin compound stabilizer or mixture of organic tin compound stabilizers, 3) an organic compound having an aromatic ring which is substituted with a hydroxyl (—OH) group and a mercapto (—SH) group ortho to each other and, optionally, 4) an organotin mercaptide or mixture of organotin mercaptides. Additionally, this invention relates to articles of manufacture, e.g. pipe, made from polymer compositions comprising: 1) an organic polymer, more particularly a halogenated organic polymer, 2) an organic tin compound stabilizer or mixture of organic tin compound stabilizers, 3) an organic compound having an aromatic ring which is substituted with a hydroxyl (—OH) group and a mercapto (—SH) group ortho to each other and, optionally, 4) an organotin mercaptide or mixture of organotin mercaptides.

It is well known that various organic polymers undergo deterioration of physical properties and color changes during processing and during exposure of the formed polymer products to various end use environmental conditions. This deterioration of physical properties and color change is particularly pronounced in some polymers (e.g. halogenated polymers) upon their exposure to heat during processing, particularly the processing into formed articles of commerce. Undesirable color changes are observed to occur at the early states (e.g. within the first 5 to 10 minutes) of the elevated temperature processing of the polymer as well as during the prolonged exposure of the polymer to heat during processing. Sometimes haziness or cloudiness accompany the color changes of the polymer and is particularly undesirable where clear or colorless products are needed. In many methods for making a polymer into a finished product the polymer remains in the processing apparatus, exposed to high temperatures, for a short period of time and therefore the color change or discoloration of the polymer resulting from prolonged exposure to heat during processing becomes only a minor consideration. The color change of the polymer during such short exposure to heat during processing has become known as early color and is of importance in the shaping of polymers into various products (e.g. pipe), particularly products which are to be light in color.

Early color is often manifested in various degrees of yellowing of the polymer, although other coloration has also been observed in early color problems. The problem of early color has received increasing attention in recent years and has become a significant consideration in the stabilization of polymers. However, there remains considerable need for improvement of the early color heat stabilization, as well as the long term heat stabilization, of polymers.

In the heat stabilization of organic polymers (e.g. halogen containing organic polymers) early color and long term color formation have been attacked by the art with various stabilizers, mixtures of stabilizers and stabilizer compositions. Organotin compounds (e.g. diorganotin mercaptides) have been used by the art alone or in combination with various other materials (e.g. mercapto-alcohols, phenols and dihydric phenols). However, such prior art stabilizers, combinations of stabilizers and stabilizer compositions have not been entirely satisfactory for a variety of reasons including low effectiveness, high cost, instability, color and poor compatability. Better stabilizers or stabilizer compositions are needed.

There has now been found a surprisingly highly effective composition for stabilizing organic polymers which overcomes many of the disadvantages of prior art stabilizers and which is effective in the early color stabilization of organic polymers during processing. Additionally, there have been surprisingly found organic polymer compositions which have improved resistance to early color formation during processing.

The present invention provides compositions for stabilizing halogen-containing organic polymers against thermal deterioration, which compositions comprise:

1) an organic tin compound or a mixture of organic tin compounds selected from compounds having the formulae:

(I) 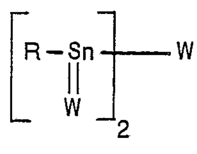

(II) 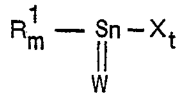 and

(IIa) 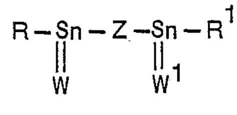

wherein

W and $W^1$ are the same or different and are oxygen or sulfur;

X is selected from

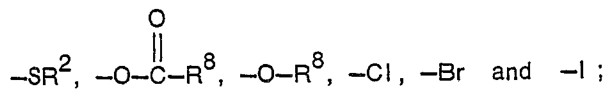

Z is 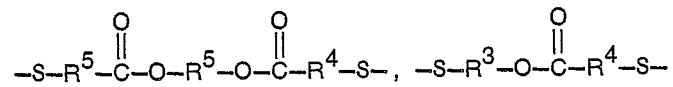

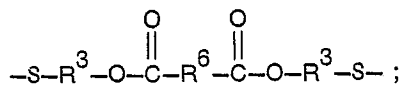

R and $R^1$ are the same or different and are selected from alkyl, aryl, alkenyl, aralkyl, alkaryl, cycloalkyl, cycloalkenyl,

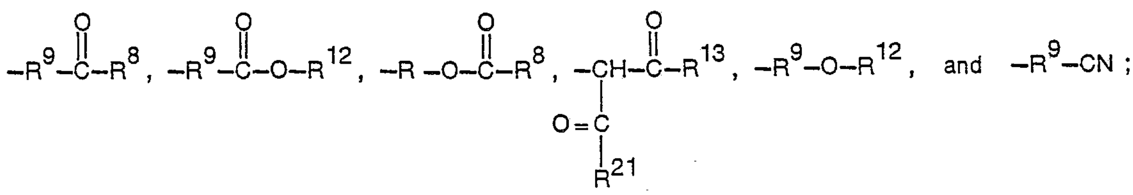

$R^2$ is alkyl, alkenyl, aryl, aralkyl, cycloalkyl, cycloalkenyl,

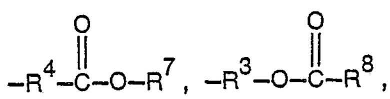

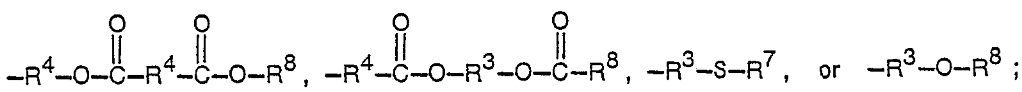

$R^3$ is alkylene of at least 2 carbon atoms, arylene, alkenylene of at least 2 carbon atoms, cycloalkylene, or cycloalkenylene,

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is —H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is —H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy; and

m = 1 or 2 and t = 0 or 1 with the proviso that m + t = 2;

2) an organic compound or mixture of organic compounds selected from compounds having the following formulae:

(III) 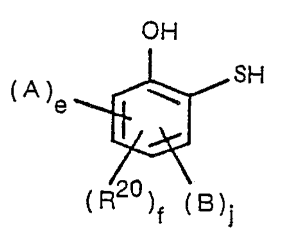 ,

(IV) 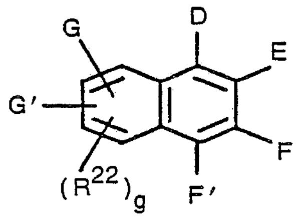 , or

(V) 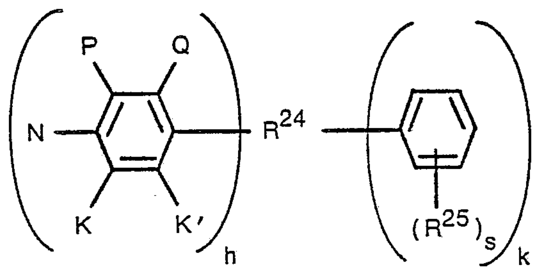 ,

wherein

A is —H, —OH or —SH,

B is —H, —OH or —SH

D is —H, —SH, —OH or $R^{26}$

E is —H, —OH, —SH or $R^{26}$

F is —H, —SH, —OH or $R^{26}$

F′ is —H, —OH, —SH or $R^{26}$

G is —H, —OH or —SH

G′ is —H, —SH or —OH

K is —H, —SH, —OH or $R^{23}$

K′ is —H, —OH, —SH or $R^{23}$

N is —H, —SH, —OH or $R^{23}$

P is —H, —SH, —OH or $R^{23}$

Q is —H, —SH, —OH or $R^{23}$

$R^{20}$ is —H alkyl, aryl, alkenyl, alkaryl, cycloalkyl, alkoxy or halogen,

$R^{26}$ is alkyl, alkenyl or halogen

$R^{22}$ is alkyl, alkenyl or halogen

$R^{23}$ is alkyl, alkenyl or halogen

$R^{24}$ is alkylene or alkenylene

$R^{25}$ is alkyl, alkenyl, halogen, —SH or —OH

e is 0, 1 or 2

j is 0, 1 or 2

f is 0, 1, 2 or 3

s is 0, 1, 2 or 3

g is 0, 1, 2 or 3

h is 1, 2 or 3

k is 0, 1, 2 or 3

h + k is 2, 2 or 4

e + j + f is 0, 1, 2, 3, or 4

with the proviso that 1) in formula (IV) two of groups D, E, F and F′ must be an OH group and an SH group bonded directly to adjacent ring carbon atoms, and 2) in formula (V) two of groups K, K′, N, P and Q must be an OH group and an SH group bonded directly to adjacent ring carbon atoms; and optionally,

3) an organotin mercaptide or mixture of organotin mercaptides selected from compounds having the formulae:

(VI) 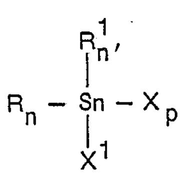 ,

(VII) 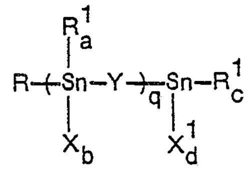 , and

(VIII) 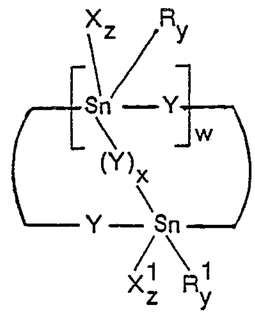

wherein

X is as previously defined and X and $X^1$ are the same or different and are selected from —Cl, —Br, —I, —$SR^2$,

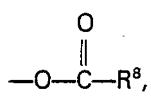

and —O—$R^8$ with the proviso that in formula (VIII) when z = 1 and in formulae (VI) and (VII) at least one X or $X^1$ is —$SR^2$;

Y is

$-(S)_v-$, $-W-R^3-W^1-$, 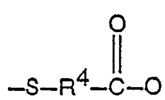 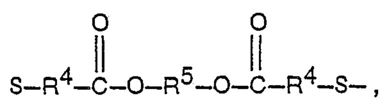

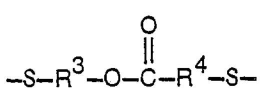 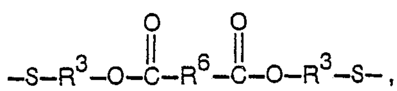 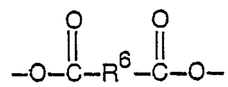

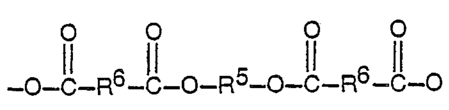 or 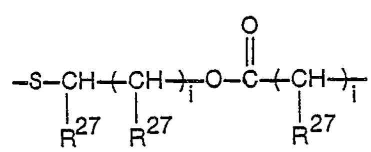 ;

R, $R^1$, $R^2$, $R^3$, $R^4$, $R^5$, $R^6$, $R^8$, W and $W^1$ are as previously defined;

$R^{27}$ is

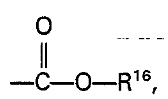

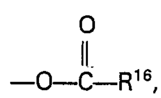

—OH, —SH, aryl, $C_1$ to $C_{18}$ alkyl or —H;

$R^{16}$ is —H or $R^8$;

i = 0 or an integer from 1 to 6 inclusive;

n = 0, 1 or 2, n' = 0, 1 or 2 and p = 1 or 2 with the proviso that n + n' = 1 or 2 and n + n' + p = 3;

a = 0, 1 or 2, b = 0, 1 or 2, q = 1 to 5, c = 1, 2 or 3 and d = 0, 1 or 2 with the proviso that a + b = 2 and c + d = 3;

v = an integer from 1 to 8 inclusive; and

w = 0, 1 or 2, x = 0 or 1, y = 1 or 2, z = 0 or 1 with the proviso that when x = 0 then y + z = 2, when x = 1 then y = 1, z = 0 and w = 1, when w = 2 then x = 0 and when w = 0 then y + z = 2, x = 0 and Y is —W—$R^3$—$W^1$ or

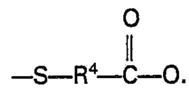

In another embodiment of this invention, the stabilizer compositions comprise: 1) an organic tin compound or mixture of organic tin compounds selected from compounds having the formula:

(IIa) 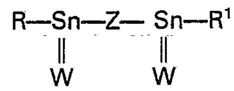

wherein

R, $R^1$, Z, W and $W^1$ are as previously defined; and

2) an organic compound or mixture of organic compounds selected from compounds having the following formulae:

(III) 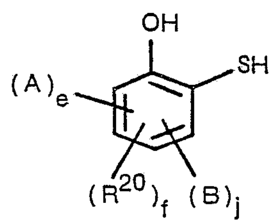 ,

(IV) 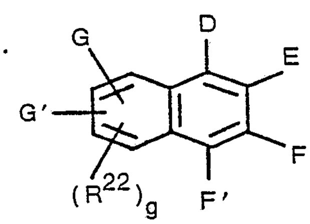 , or

(V) 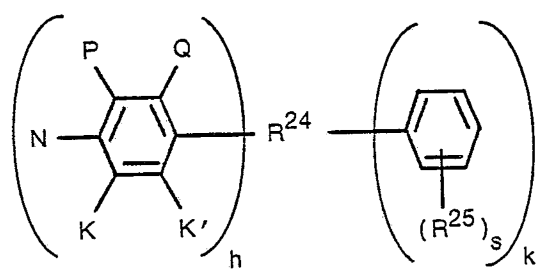

wherein

A, B, D, E, F, F', G, G', K, K', N, P, Q, $R^{20}$, $R^{21}$, $R^{22}$, $R^{23}$, $R^{24}$, $R^{25}$, e, j, f, s, g, h and k are as previously defined; and, optionally,

3) an organotin mercaptide or mixture of organotin mercaptides selected from compounds having the formulae:

(VI) 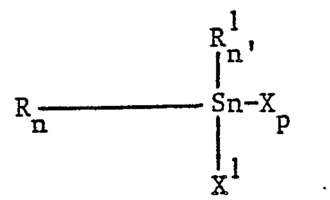 ,

(VII) 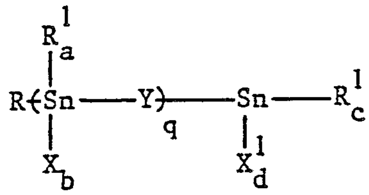 , or

(VIII) 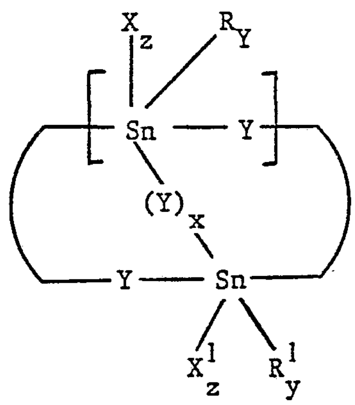

wherein

X, $X^1$, Y, R, $R^1$, $R^2$, $R^3$, $R^4$, $R^5$, $R^6$, $R^8$, $R^{16}$, $R^{27}$, W, i, n, n′, p, a, b, q, c, d, v, w, x, y and z are as previously defined.

It should be noted that, in an effort to simplify the foregoing formulae and render them as clear and concise as possible, some letters are used more than once in the same formula and/or more than one formula. Thus, for example, $R^1$ appears twice in formula VIII, and also in formulae VI, VII and XIX. It is intended that in those instances where the same letter is used either more than once within the same formula, or in more than one formula, that letter represents at each independent occurrence any group contained in the set of groups encompassed by its definition, or any and all subsets thereof. It is further intended that any modification or limitation in the definition of a particular letter at one occurrence does not necessarily affect its definition at any other occurrence. For example, should the definition of X in formula VI be limited from $—SR^2$,

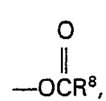

$—OR^8$, Cl, Br or I to Cl, Br, or I, then X in each of formulas VII, VIII and XIX may still represent at each independent occurrence the set of groups consisting of $—SR^2$,

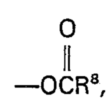

$—OR^8$, Cl, Br and I, or any and all subsets thereof such as, for example, $—SR^2$,

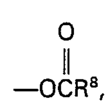

and $—OR^8$, or Cl, Br, I and $—OR^8$.

The stabilizer composition in accordance with this invention has unexpectedly been found to be highly effective in the stabilization of organic polymers exposed to heat during processing. More especially the stabilizer composition of this invention has been unexpectedly found to be highly effective in the early color stabilization of organic polymers exposed to heat during processing (i.e. to be highly effective in reducing or preventing discoloration of an organic polymer during the early stages of the exposure of the organic polymer to heat during processing). There has also now been unexpectedly found in accordance with this invention an advantageous polymer composition having improved stability, more particularly improved resistance to early color formation upon exposure to heat during processing. Additionally, there has now been unexpectedly found in accordance with this invention, articles of manufacture, e.g. pipe, made from polymer, compositions having improved resistance to early color formation upon exposure to heat during the forming of said articles of manufacture.

As used herein the term alkyl represents monovalent straight or branched chain hydrocarbon radicals containing, for example, 1 to 20 carbon atoms. The term aryl refers to monovalent $C_6$—$C_{10}$ aromatic rings such as benzene and naphthalene. The term alkenyl refers to monovalent straight or branched chain $C_2$ to $C_{20}$ hydrocarbon radicals containing at least one double bond. The term aralkyl represents a monovalent $C_1$ to $C_{20}$ hydrocarbon radical having attached thereto an aryl radical. The term alkaryl refers to monovalent aryl radicals having attached thereto at least one $C_1$—$C_{20}$ alkyl group. The term cycloalkyl represents monovalent $C_3$—$C_8$ saturated cycloaliphatic radicals, and the term cycloalkenyl represents $C_5$—$C_8$ cycloaliphatic radicals containing at least one double bond.

The organic tin compounds according to formulae (I) and (II) and (IIa), organic compounds according to formulae (III), (IV) and (V) and the organotin mercaptides according to formulae (VI), (VII) and (VIII) may all be prepared by methods well known in the art. For example, methods for preparing the organic tin compounds according to formulae (I) and (II), and the organotin mercaptides according to formulae (VI), (VII) and (VIII) are disclosed in U.S. Patents Nos. 2,267,777, 2,746,946, 3,021,302, 3,565,930, 3,565,931, 3,869,487, 3,979,359, 4,118,371, 4,134,878 and 4,183,846.

In accordance with the practice of this invention, the compounds according to formulae (III), (IV) and (V) have a vicinal OH/SH arrangement (i.e. have an —OH group and an —SH group on adjacent ring carbon atoms). However, compounds according to formulae (III), (IV) and (V) may have, in addition to the first vicinal OH/SH arrangement on the ring, further vicinal OH/SH arrangements on the ring. Such additional vicinal OH/SH arrangements on the ring may be separated from the first vicinal OH/SH arrangement on the ring by one or more ring carbon atoms or may occupy a position on the ring adjacent to the first vicinal OH/SH arrangement on the ring or may include the OH or SH or both OH and SH of the first vincinal OH/SH arrangement. These arrangements of OH groups and SH groups may be illustrated by the following examples. In formula (III) the ring carbon atoms may be numbered consecutively in a clockwise manner starting at the carbon atom to which the OH group is attached as being number one. A compound according to formula (III) having the single vicinal OH/SH arrangement shown therein would have the OH group and SH group at ring carbon atoms numbered one and two respectively. Other compounds according to formula (III) having more than one vicinal OH/SH arrangement may, for example, include such compounds according to formula (III) having a further OH group at ring carbon number four and a further SH group at ring carbon number five, a compound according to formula (III) having a further OH group at ring carbon number three, or a compound according to formula (III) having a further SH group at ring carbon number 6. In a like manner, multiple vicinal OH/SH arrangements may be present in compound according to formula (IV) and (V) in the practice of this invention.

The preferred organic tin compounds used in the practice of this invention are those compounds according to formula (I) where R is methyl, butyl or octyl and W is sulfur; or those compounds according to formula (II) where $R^1$ is methyl or butyl, W is sulfur, X is $—SR^2$ where $R^2$ is

$$—R^4\overset{\overset{O}{\|}}{C}OR^7,$$

m = 1 and t = 1, and those compounds according to formula (IIa) where R and $R^1$ are methyl, butyl, octyl or

$$—R^9—\overset{\overset{O}{\|}}{C}—O—R^{12};$$

W and $W^1$ are oxygen or sulfur; and Z is

$$-S-R^3-O-\overset{\overset{O}{\|}}{C}-R^6-\overset{\overset{O}{\|}}{C}-O-R^3-S,\quad -S-R^3-O-\overset{\overset{O}{\|}}{C}-R^4-S-\quad \text{or}\quad -S-R^4-\overset{\overset{O}{\|}}{C}-O-R^5-O-\overset{\overset{O}{\|}}{C}-R^4-S.$$

Organic tin compounds according to formulae (I) and (II) include, but are not limited to, compounds as shown in the following table I;

TABLE I

(I) 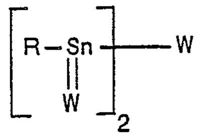

(II) 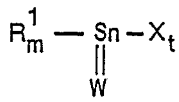

| R | $R^1$ | W | X | m | t |
|---|---|---|---|---|---|
| $-C_4H_9$ | – | S | – | – | – |
| $-C_8H_{17}$ | – | O | – | – | – |
| – | $-CH_3$ | S | $-SCH_2CH_2O\overset{O}{\overset{\|}{C}}C_{17}H_{33}$ | 1 | 1 |
| – | $-CH_3$ | S | $-SCH_2\overset{O}{\overset{\|}{C}}OC_8H_{17}$ | 1 | 1 |
| – | $-CH_2CH_2\overset{O}{\overset{\|}{C}}OC_4H_9$ | S | $-SCH_2CH_2\overset{O}{\overset{\|}{C}}OC_{18}H_{37}$ | 1 | 1 |
| – | $-C_4H_9$ | S | – | 2 | 0 |
| – | $-C_8H_{17}$ | O | – | 2 | 0 |

Organic tin compounds according to formula (IIa) include, but are not limited to, compounds shown in the following Table Ia:

TABLE Ia

(IIa) 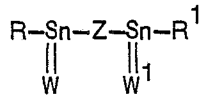

| R and $R^1$ | W | $W^1$ | Z |
|---|---|---|---|
| $-CH_3$ | S | S | 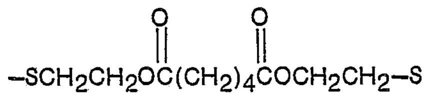 |
| $-C_4H_9$ | S | S | 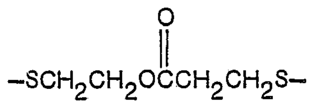 |
| $-C_8H_{17}$ | O | S | 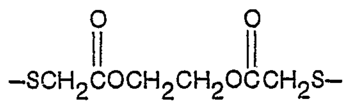 |
| 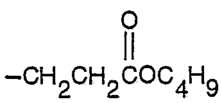 | S | S | 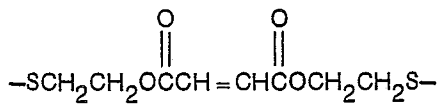 |
| $-CH_3$ | S | S | 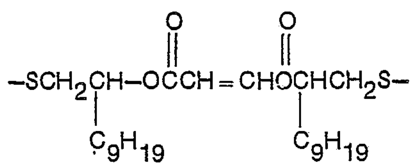 |
| $-C_4H_9$ | S | S | 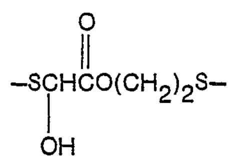 |
| $-C_4H_9$ | O | O | 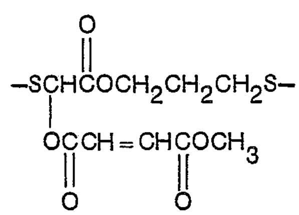 |
| $-CH_3$ | S | S | 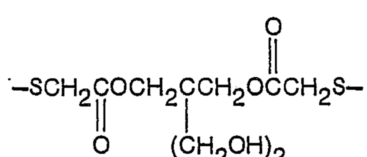 |
| $-CH_3$ | S | S | 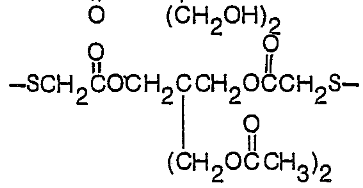 |

As examples of organic compounds according to formula (III), usable in the practice of this invention, there are included, but are not limited to, the following compounds:

1-hydroxy-2-mercapto benzene (ortho hydroxythiophenol)
1,3-dihydroxy-2-mercapto benzene
1,4-dihydroxy-2-mercapto benzene
1,5-dihydroxy-2-mercapto benzene
1,6-dihydroxy-2-mercapto benzene
1,3,4-trihydroxy-2-mercapto benzene
1,3,5-trihydroxy-2-mercapto benzene
1,3,6-trihydroxy-2-mercapto benzene
1,4,5-trihydroxy-2-mercapto benzene
1,4,6-trihydroxy-2-mercapto benzene
1,5,6-trihydroxy-2-mercapto benzene
1,3,4,5-tetrahydroxy-2-mercapto benzene
1,3,4,6-tetrahydroxy-2-mercapto benzene
1,4,5,6-tetrahydroxy-2-mercapto benzene
1,3,4,5,6-pentahydroxy-2-mercapto benzene
1-hydroxy-2,3-dimercapto benzene
1-hydroxy-2,4-dimercapto benzene
1-hydroxy-2,6-dimercapto benzene
1-hydroxy-2,3,5-trimercapto benzene
1-hydroxy-2,3,6-trimercapto benzene
1-hydroxy-2,3,4,5-tetramercapto benzene
1-hydroxy-2,3,4,6-tetramercapto benzene
1-hydroxy-2,3,4,5,6-pentamercapto benzene
1,3-dihydroxy-2,4-dimercapto benzene
1,3-dihydroxy-2,6-dimercapto benzene
1,3,5-trihydroxy-2,4-dimercapto benzene
1,3,5-trihydroxy-2,4,6-trimercapto benzene
1-hydroxy-2-mercapto-4-methyl benzene
1,3-dihydroxy-2-mercapto-5,6-dioctyl benzene
1-hydroxy-2-mercapto-4-phenyl benzene
1-hydroxy-2-mercapto-5-cyclohexyl benzene
1,3-dihydroxy-2-mercapto-4-butyl benzene
1-hydroxy-2,6-dimercapto-4-chloro benzene
1-hydroxy-2-mercapto-4,5-dichloro benzene
1-hydroxy-2-mercapto-4-chloro-6-hexyl benzene
1-hydroxy-2-mercapto-3-ethyl-5 isopropyl benzene.

Examples of compounds according to formula (IV) usable in the practice of this invention include, but are not limited to, compounds as shown in the following Table II:

TABLE II

| D | E | F | F′ | $R^{22}$ | G | G′ | g |
|---|---|---|---|---|---|---|---|
| OH | SH | — | — | — | — | — | 0 |
| — | OH | SH | — | — | — | — | 0 |
| OH | SH | OH | — | — | — | — | 0 |
| SH | OH | OH | — | — | — | — | 0 |
| OH | SH | — | OH | — | — | — | 0 |
| SH | OH | — | SH | — | — | — | 0 |
| OH | SH | — | — | — | OH | SH | 0 |
| OH | SH | OH | OH | — | — | — | 0 |
| OH | SH | — | $-CH_3$ | — | — | — | 0 |
| SH | OH | — | $-C_2H_5$ | — | — | — | 0 |
| — | OH | SH | — | $-C_6H_{13}$ | — | — | 1 |
| OH | SH | — | $-C_4H_9$ | $-C_8H_{17}$ | — | — | 2 |
| SH | OH | $-C_3H_9$ | — | $-C_4H_9$ | OH | — | — |
| OH | SH | — | OH | $C_2H_3$ | — | — | 1 |
| — | SH | OH | — | $-C_{12}H_{25}$ | SH | OH | 1 |
| OH | SH | $-CH_3$ | $-CH_3$ | — | — | — | 0 |
| OH | SH | — | — | Cl | — | — | 1 |
| OH | SH | — | Cl | — | — | — | 0 |
| OH | SH | — | Cl | $C_{18}H_{35}$ | — | — | 1 |
| OH | SH | — | Cl | — | SH | — | 0 |
| $-C_2H_5$ | SH | OH | $-C_2H_5$ | — | — | — | 0 |
| Cl | OH | SH | Cl | — | — | — | 0 |
| OH | SH | — | — | — | OH | OH | 0 |

Among examples of compounds according to formula (V) usable in the practice of this invention there are included, but not limited to, the compounds shown in the following Table III:

TABLE III

| K | K' | N | P | Q | $R^{25}$ | $R^{24}$ | h | k | s |
|---|---|---|---|---|---|---|---|---|---|
| — | — | OH | SH | — | — | $CH_2$ | 1 | 1 | 0 |
| — | — | OH | SH | — | — | $CH_2$ | 2 | 0 | 0 |
| — | — | — | OH | SH | — | $CH_2$ | 2 | 0 | 0 |
| — | — | — | SH | OH | — | $CH_2$ | 2 | 0 | 0 |
| OH | — | SH | OH | — | — | $C(CH_3)_2$ | 1 | 1 | 0 |
| SH | OH | — | SH | OH | — | $C_4H_8$ | 1 | 1 | 0 |
| — | — | OH | SH | OH | — | $C_2H_2$ | 1 | 1 | 0 |
| SH | $C_3H_7$ | OH | $C_3H_7$ | — | Br | $C_6H_{12}$ | 1 | 1 | 2 |
| OH | — | SH | OH | SH | $C_6H_{13}$ | $CH_2$ | 1 | 1 | 1 |
| OH | $CH_3$ | SH | — | — | — | $CH_2$ | 2 | 0 | 0 |
| OH | OH | SH | OH | OH | $C_8H_{17}$ | $CH_2$ | 1 | 1 | 1 |
| — | — | SH | SH | OH | $C_2H_5$ | $C(CH_3)_2$ | 1 | 1 | 2 |
| $CH_3$ | — | OH | SH | — | — | $CH(CH_2)_3$ | 3 | 0 | 0 |
| — | — | OH | SH | $C_3H_7$ | Cl | $C_{10}H_{24}$ | 1 | 1 | 1 |
| — | $C_4H_9$ | — | SH | OH | — | $C(CH_2)_4$ | 4 | 0 | 0 |
| $C_8H_{17}$ | — | $C_8H_{17}$ | OH | SH | $CH_3$ | $C_4H_7(CH_3)$ | 1 | 1 | 1 |
| — | — | OH | SH | — | OH | $C(CH_3)_2$ | 1 | 1 | 1 |

Compounds according to formula (III) are preferably used in the practice of this invention. More preferably the compounds according to formula (III) used in the practice of this invention are ortho hydroxythiophenol and lower alkyl (i.e. $C_1$ to $C_9$ alkyl) substituted ortho hydroxythiophenols.

Where organotin mercaptides according to formulae (VI) (VII) and (VIII) are used in the practice of this invention they are preferably those compounds according to formula (VI) where R is methyl or butyl, $R^1$ is methyl or butyl, X is $-SR^2$ where $R^2$ is

$$-R^4\overset{\overset{O}{\|}}{C}OR^7,$$

$X^1$ is $-SR^2$ where $R^2$ is

$$-R^4\overset{\overset{O}{\|}}{C}OR^7,$$

n = 1, n' = 1 and p = 1; those compounds according to formula (VII) where R is methyl, X is $-SR^2$ where $R^2$ is

$$-R^4\overset{\overset{O}{\|}}{C}OR^7,$$

$R^1$ is methyl, $X^1$ is —$SR^2$ where $R^2$ is

$$R^4\overset{O}{\overset{\|}{C}}OR^7,$$

Y is —S—, a = 1, b = 1, c = 2, d = 1 and q = 1, or those compounds according to formula (VIII) where R is methyl, $R^1$ is methyl, X is —$SR^2$ where $R^2$ is

$$-R^4\overset{O}{\overset{\|}{C}}R^7,$$

$X^1$ is —$SR^2$ where $R^2$ is

$$-R^4\overset{O}{\overset{\|}{C}}OR^7,$$

Y is —S—, w = 1, x = 0, y = 1 and z = 1.

Organotin mercaptides according to formulae (VI), (VII) and (VIII) include, but are not limited to, compounds shown in the following Tables IV, V and VI, respectively.

TABLE IV

(VI) 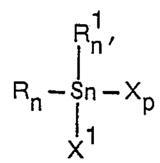

| R | X and $X^1$ | n | n′ | p |
|---|---|---|---|---|
| $-CH_3$ | $-SCH_2\overset{O}{\overset{\|}{C}}OC_8H_{17}$ | 1 | 0 | 2 |
| $-C_4H_9$ | $-SCH_2CH_2O\overset{O}{\overset{\|}{C}}C_7H_{15}$ | 1 | 0 | 2 |
| $-CH_2CH_2\overset{O}{\overset{\|}{C}}OC_4H_9$ | $-SCH_2CH_2O\overset{O}{\overset{\|}{C}}CH_3$ | 2 | 0 | 1 |
| $-CH_3$ | $-SCH_2CH_2O\overset{O}{\overset{\|}{C}}C_{17}H_{35}$ | 2 | 0 | 1 |

TABLE V 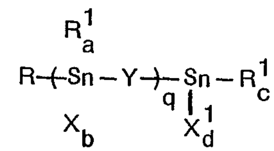 (VII)

| R and $R^1$ | X | $X^1$ | Y | a | b | c | d | q |
|---|---|---|---|---|---|---|---|---|
| $-CH_3$ | $-SCH_2CH_2O\overset{O}{\overset{\|}{C}}C_{11}H_{23}$ | Same as X | $-S-$ | 0 | 2 | 1 | 2 | 1 |
| $-C_8H_{17}$ | $-SCH_2\overset{O}{\overset{\|}{C}}OC_{13}H_{27}$ | do | $-S-$ | 1 | 1 | 2 | 1 | 1 |
| $-C_4H_9$ | $-SCH_2CH_2O\overset{O}{\overset{\|}{C}}C_8H_{17}$ | do | $-SCH_2CH_2\overset{O}{\overset{\|}{C}}O-$ | 1 | 1 | 2 | 1 | 1 |
| $-CH_2CH_2\overset{O}{\overset{\|}{C}}OC_4H_9$ | $-SCH_2CH_2\overset{O}{\overset{\|}{C}}OC_8H_{17}$ | do | $-S-S-$ | 0 | 2 | 1 | 2 | 1 |
| $-CH_3$ | $-SCH_2CH_2O\overset{O}{\overset{\|}{C}}C_{17}H_{33}$ | do | $-SCH_2\overset{O}{\overset{\|}{C}}OC_4H_8O\overset{O}{\overset{\|}{C}}CH_2S-$ | 0 | 2 | 1 | 2 | 2 |
| $-CH_3$ | $-SCH_2CH_2O\overset{O}{\overset{\|}{C}}CH=CH\overset{O}{\overset{\|}{C}}OCH_3$ | do | $-S-$ | 0 | 2 | 1 | 2 | 1 |
| $-C_4H_9$ | $-SCH_2CH_2O\overset{O}{\overset{\|}{C}}C_{17}H_{33}$ | Cl | $-S-$ | 1 | 1 | 2 | 1 | 1 |
| $-C_4H_9$ | $-SCH_2CH_2O\overset{O}{\overset{\|}{C}}C_8H_{17}$ | Same as X | $-S-CH_2\overset{O}{\overset{\|}{C}}O-$ | 0 | 2 | 1 | 2 | 1 |
| $-CH_3$ | $-SCH_2CH_2O\overset{O}{\overset{\|}{C}}C_{11}H_{23}$ | do | $-S-$ | 2 | 2 | 1 | 2 | 1 |
| $-C_4H_9$ | $-SCH_2CH_2O\overset{O}{\overset{\|}{C}}C_7H_{15}$ | do | 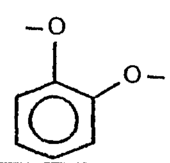 | 0 | 2 | 1 | 2 | 1 |

TABLE VI

(VIII) 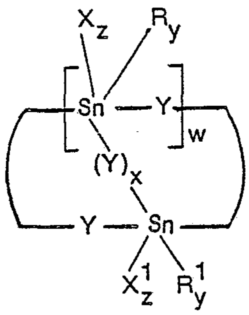

| R and $R^1$ | X | Y | w | x | y | z |
|---|---|---|---|---|---|---|
| $-CH_3$ | – | 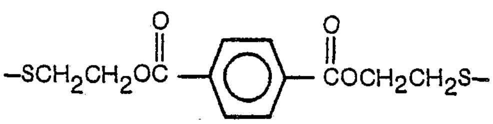 | 1 | 1 | 1 | 0 |

As used in Tables I—V above, and throughout this specification, the radicals $-C_4H_9$, $-C_8H_{17}$, $-C_{12}H_{25}$, $-C_9H_{19}$ and $-C_{10}H_{21}$ represent n-butyl, n-octyl, n-dodecyl, n-nonyl and n-decyl respectively.

The carboxyl radicals

$$-O\overset{O}{\overset{\|}{C}}C_{17}H_{33},\quad -O\overset{O}{\overset{\|}{C}}C_{17}H_{35},\quad -O\overset{O}{\overset{\|}{C}}C_7H_{15},\quad -O\overset{O}{\overset{\|}{C}}C_{11}H_{23}\quad \text{and}\quad -O\overset{O}{\overset{\|}{C}}C_8H_{17}$$

are derived from oleic acid, stearic acid, n-octanoic acid, lauric acid, and pelargonic acid respectively. Likewise, the radicals $-OC_{13}H_{27}$, $-OC_{18}H_{37}$, and $-OC_8H_{17}$ are derived from tridecanol, stearyl alcohol and iso-octanol respectively.

In the stabilizer compositions of this invention the weight ratio of a) the organic tin compound or mixture of organic tin compounds according to formulae (I), (II) and/or (IIa), to b) the organic compound or mixture of organic compounds according to formulae (III), (IV) and (V) may vary over a wide range. There may be used a weight ratio of a) the organic tin compound or mixture of organic tin compounds according to formulae (I), (II) and/or (IIa) to b) the organic compound or mixture of organic compounds according to formulae (III), (IV) and (V) of from 400:1 to 1:199, preferably from 400:1 to 1:100, more preferably from 400:1 to 1:20. When the optional organotin mercaptide or mixture of organotin mercaptides according to formulae (VI), (VII) and (VIII) is employed, it is utilized in amounts such that the weight ratio of the organic tin compound or mixture of organic tin compounds according to formulae (I), (II) and/or (IIa) to organotin mercaptide or mixture of organotin mercaptides according to formulae (VI), (VII) and (VIII) is 99:1 to 1:99.

Various other substances may be added to or used in combination with the stabilizer composition of this invention including, for example, an innocuous diluent (e.g. hydrocarbon oil or hydrocarbon solvent), plasticizer, wax, lubricant, release agent, antioxidant, U.V. stabilizer and fire retardant well-known in the art. Methods well-known in the art for physically combining two or more materials into a homogeneous blend (i.e. a thoroughly mixed composition) may be used to prepare the stabilizer composition of this invention.

There is also now provided in accordance with this invention a polymer composition comprising 1) an organic polymer normally susceptible to thermal degradation and discoloration, 2) an organic tin compound or mixture of organic tin compounds according to formulae (I), (II) and/or (IIa), 3) an organic compound or mixture of organic tin compounds according to formulae (I), (II) and/or (IIa), 3) an organic compound or mixture of organic compounds according to formulae (III), (IV) and (V), and, optionally, 4) an organotin mercaptide or mixture of organotin mercaptides according to formulae (VI), (VII) and (VIII).

In the practice of the polymer composition of this invention the combined amount by weight of the a) organic tin compound or mixture of organic tin compounds according to formulae (I), (II) and/or (IIa) b) organic compound or mixture of organic compounds according to formulae (III), (IV) and (V), and, optionally, c) organotin mercaptide or mixture of organotin mercaptides according to formulae (VI), (VII) and (VIII) used in the polymer composition may vary over a wide range, it being necessary only that there be employed a stabilizingly effective amount. There may be employed an amount by weight of the a) organic tin compound or mixture of organic tin compounds according to formulae (I), (II), and/or (IIa), b) organic compound or mixture of organic compounds according to formula (III), (IV) and (V), and, optionally c) organotin mercaptide or mixture of organotin mercaptides according to formulae (VI), (VII) and (VIII) that is conventionally employed by the art for adding a stabilizer to a polymer, such as 0.001 to 5%, preferably 0.01 to 2%, more preferably 0.01 to 1% by weight based on the weight of the polymer. There may be used in the practice of the polymer composition of this invention a ratio of the a) organic tin compound or mixture of organic tin compounds according to formulae (I), (II) and/or (IIa) to b) organic compound or mixture of organic compounds according to formulae (III), (IV) and (V), and, optionally, to c) organotin mercaptide or mixture of organotin mercaptides according to formulae (VI), (VII) and (VIII) as previously disclosed herein for the stabilizer composition of this invention.

Conventional methods well known in the art for blending together polymers and additives may be employed to prepare the polymer compositions of this invention. The organic tin compound or mixture of organic tin compounds according to formulae (I), (II) and/or (IIa), the organic compound or mixture of organic compounds according to formulae (III), (IV) and (V), and the optional organotin mercaptide or mixture of organotin mercaptides according to formulae (VI), (VII) and (VIII) may be separately added to the polymer or they may be premixed and the mixture added to the polymer. Other additives well known in the art, such as for example plasticizers, fillers, pigments, lubricants, antioxidants, fire retardants, U.V. stabilizers, antistatic agents and cross linking agents may be employed in the polymer composition or this invention.

Organic polymers normally susceptible to thermal deterioration (i.e. heat induced degradation) are generally useful in the practice of the polymer compositions of this invention. In view of their similar thermal behavior, i.e. discoloration, during elevated temperature processing and their similar capacity to dehydrohalogenate, various halogen-containing organic polymers such as vinyl halide and vinylidene halide homopolymers and copolymers could be expected to be useful in the practice of this invention. Especially preferred to be used in the polymer composition of this invention is a homopolymer or copolymer or mixture thereof of a vinyl chloride or vinylidene chloride monomer. Mixtures of organic polymers at least one of which is a homopolymer or copolymer of a vinyl halide or vinylidene halide monomer may also be used in the practice of the polymer composition of this invention. Among the halogen containing organic polymers considered to be useful in the practice of the polymer composition of this invention there are included, for example halogenated olefin homopolymers, halogenated olefin copolymers, vinyl halide homopolymers, vinyl halide copolymers, vinylidene halide homopolymers, vinylidene halide copolymers and polymer mixtures containing said halogen containing organic polymers.

As vinyl halide homopolymers, vinyl halide copolymers and polymer blends containing vinyl halide homopolymers or vinyl halide copolymers there, for example, include (1) polyvinyl chloride, polyvinylidene chloride, polyvinyl bromide, polyvinyl fluoride, polyvinylidene fluoride, (2) copolymers of vinyl chloride with a copolymerizable ethylenically unsaturated monomer such as vinylidene chloride, vinyl acetate, vinyl butyrate, vinyl benzoate, diethyl fumarate, diethyl maleate, other alkyl fumarates and maleates, vinyl propionate, methyl acrylate, 2-ethylhexyl acrylate, butyl acrylate, ehtyl acrylate, and other alkyl acrylates, methyl methacrylate, ethyl methacrylate, butyl methacrylate, hydroxyethyl methacrylate and other alkyl methacrylate, methyl alpha chloroacrylate, styrene, vinyl ethers such as vinyl ethyl ether, vinyl chloroethyl ether, vinyl phenyl ether, vinyl ketones such as vinyl methyl ketone, vinyl phenyl ketone, 1-fluoro-1-chloroethylene, acrylonitrile, chloroacrylonitrile, allylidene diacetate, chloroallylidene diacetate, ethylene and propylene, and (3) polymer blends such as blends of polyvinyl chloride and polyethylene, polyvinyl chloride and chlorinated polyethylene, polyvinyl chloride and polymethyl methacrylate, polyvinyl chloride and polybutylmethacrylate, polyvinyl chloride and polystyrene, polyvinyl chloride and acrylonitrile-butadiene- styrene copolymer, and polyvinyl chloride and polyethylene and polymethyl methacrylate. Typical vinyl halide copolymers include vinyl chloride-vinyl acetate (87—13), vinyl chloride-vinylidene chloride (95—5), vinyl chloride-diethylfumarate (95—5), vinyl chloride-trichloroethylene (95—5) and vinyl chloride-2-ethylhexylacrylate (80—20). The polymer blends comprise physical blends of at least two distinct polymeric species and contain from 25 to 95 weight percent of vinyl halide homopolymer. The vinyl halide copolymers are copolymers comprising from 25 to 95 mole percent vinyl halide units.

Other halogen containing polymers may include, for example, chlorinated polyethylene having 14 to 75%, e.g. 27%, chlorine by weight, chlorinated natural and synthetic rubber, chlorinated polystyrene and rubber hydrochloride. The homopolymers and copolymers of vinyl chloride or vinylidene chloride and polymer mixtures containing said homopolymer or copolymers are preferred in the practice of the polymer composition of this invention.

The articles of manufacture in accordance with this invention may be produced by any of the well-known, conventional techniques for molding polymers.

This invention is further described by the following nonlimiting examples in which all amounts are by

weight and all temperatures are in degrees Centigrade unless otherwise indicated.

The following examples teach various stabilizer compositions according to this invention.

Examples 1—7

Several mixtures are prepared by dry blending to 110°C in a Henschel high intensity mixer (Model 2JSS) 100.0 parts of polyvinyl chloride (Geon 103EP-F-76 available commercially from B. F. Goodrich Chemical Company) with 3.0 parts of fine particle size calcium carbonate coated with calcium stearate, 1.0 part titanium dioxide, 1.2 parts paraffin wax (ADVAWAX® 165 paraffin wax available commercially from Carstab Corporation), 0.60 part calcium stearate, 0.15 part of an oxidized low molecular weight ethylene homopolymer (AC629A available commercially from Allied Chemical Corporation), and each in turn of the stabilizer compositions listed in Table A said amounts being parts by weight of stabilizer per hundred parts polyvinyl chloride. The resulting mixture is masticated on a two-roll mill at about 193°C. Samples are taken at one minute intervals beginning after the first introduction of the mix to the mill.

The appearance of each sample taken from the mill is evaluated using the following scale:

10 9 8 7 6 5 4 3 2 1 0

white ————→ Tan-Orange ————→ Burn

The results of these tests are indicated in Table A.

TABLE A (Continued)

| Example No. | Stabilizer | Amount of Stabilizer phr (1) | 1 | 2 | 3 | 4 | 5 | 6 | 7 | 8 | 9 | 10 |
|---|---|---|---|---|---|---|---|---|---|---|---|---|
| | Mixture of equal wt. proportions of: | | | | | | | | | | | |
| 6 | 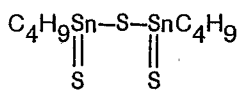 and | 0.40 | | | | | | | | | | |
| | 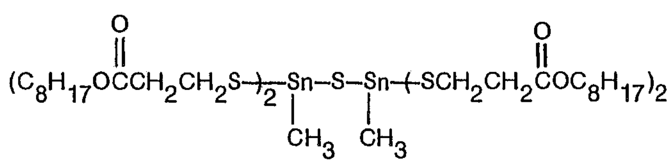 | | 10+ | 10+ | 9+ | 7 | 5+ | 5 | 4 | 2 | 2 | 0 |
| | MMBP(3) | 0.10 | | | | | | | | | | |
| | Mixture of equal wt. proportions of: | | | | | | | | | | | |
| 7 | 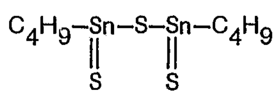 and | 0.40 | | | | | | | | | | |
| | 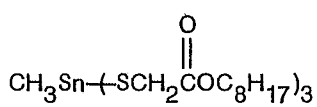 | | 10+ | 10 | 10 | 9 | 8 | 7 | 5 | 3 | 1 | 1 |
| | MNP(4) | 0.06 | | | | | | | | | | |

TABLE A

| Example No. | Stabilizer | Amount of Stabilizer phr (1) | 1 | 2 | 3 | 4 | 5 | 6 | 7 | 8 | 9 | 10 |
|---|---|---|---|---|---|---|---|---|---|---|---|---|
| 1 | – | – | pink | | | | | | | | | |
| 2 | OHTP(2) | 0.01 | pink | | | | | | | | | |
| 3 | 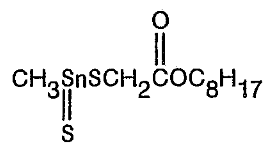 | 0.20 | 9+ | 8 | 7 | 6+ | 6 | 5 | 4 | 3 | 1 | 0 |
| 4 | 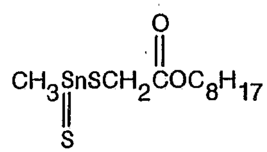 | 0.20 | 10+ | 10 | 9 | 9 | 8 | 7 | 6 | 5 | 2 | 1 |
| | OHTP | 0.01 | | | | | | | | | | |
| 5 | 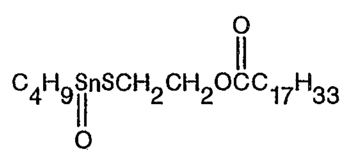 | 0.23 | 10+ | 10 | 9+ | 9 | 7+ | 6 | 4 | 2 | 1 | 0 |
| | OHTP | 0.01 | | | | | | | | | | |

(Numerical Rating after Min. = columns 1–10)

(1)phr = parts per hundred parts of polyvinyl chloride
(2)OHTP is ortho-hydroxythiophenol
(3)MBP is 2-mercapto-4-methyl-6-t-butylphenol
(4)MNP is 2-mercapto-4-nonylphenol.

Numerical ratings in the Table A illustrate that improved early color is obtained with stabilizer compositions of this invention.

The following stabilizer compositions according to this invention are prepared and tested in the same manner as those of Examples 1—7 with substantially equivalent results:

EXAMPLES 8 – 16

| Example No. | Stabilizer | Amount of Stabilizer, phr |
|---|---|---|
| 8 | 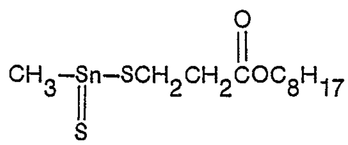 | 0.20 |
| | OHTP | 0.01 |
| 9 | 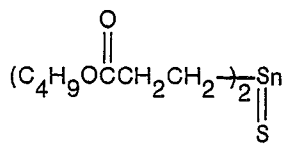 | 0.23 |
| | OHTP | 0.02 |
| | Mixture of equal wt. proportions of: | |
| 10 | 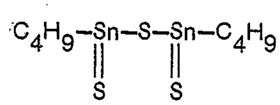 | 0.24 |
| | and $(C_4H_9)_2Sn(SC_4H_9)_2$ | |
| | OHTP | 0.06 |
| | Mixture of equal wt. proportions of: | |
| 11 | 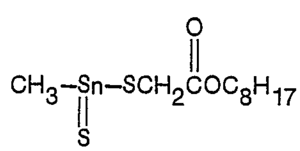 and | 0.35 |
| | 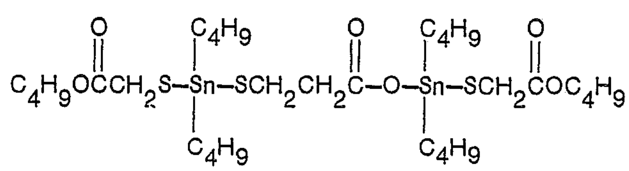 | |
| | DBTP[5] | 0.02 |

EXAMPLES 8 – 16 (Continued)

| Example No. | Stabilizer | Amount of Stabilizer, phr |
|---|---|---|
| | Mixture of equal wt. proportions of: | |
| 12 | 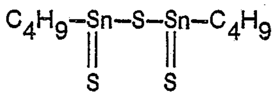 and | 0.40 |
| | 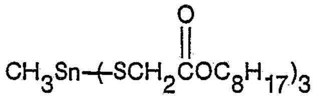 | |
| | OHTP | 0.001 |

(5) DBTP is 2-mercapto-4,6-di-t-butylphenol

| Example No. | Stabilizer | Amount of Stabilizer, phr |
|---|---|---|
| 13 | 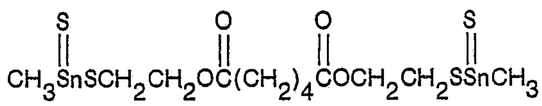 | 0.25 |
| | 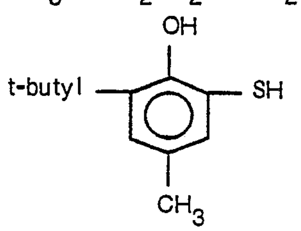 | 0.02 |
| 14 | 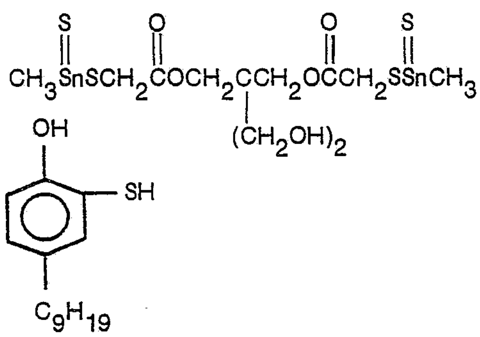 | 0.25 |
| | | 0.005 |
| 15 | 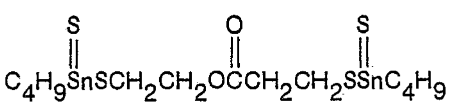 | 0.20 |
| | 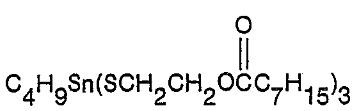 | 0.20 |
| | 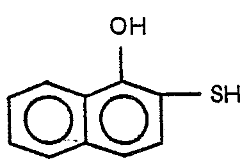 | 0.001 |

EXAMPLES 8 – 16 (Continued)

| Example No. | Stabilizer | Amount of Stabilizer, phr |
|---|---|---|
| 16 | 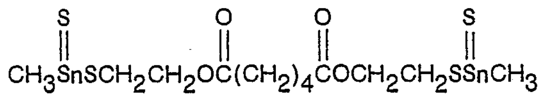 | 0.25 |
| | 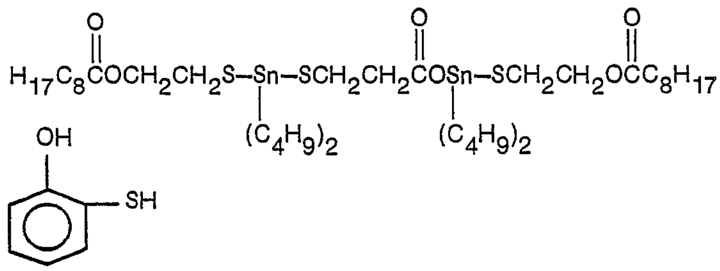 | 0.25 |
| | | 0.20 |

**Claims for the Contracting States: BE CH DE FR GB IT LI NL SE**

1. A composition for stabilizing a halogen-containing organic polymer against the deteriorative effects of heat characterised in that it comprises

(A) an organic tin compound or mixture of organic tin compounds selected from compounds having the general formulae:

(I) 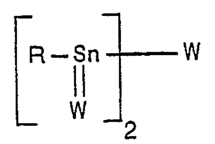

(II) 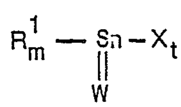 and

(IIa) 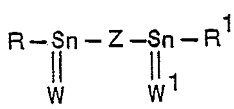

wherein

W and $W^1$ are the same or different and are oxygen or sulfur;

X is selected from

$-SR^2$, 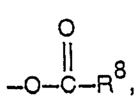, $-O-R^8$, $-Cl$, $-Br$ and $-I$;

Z is 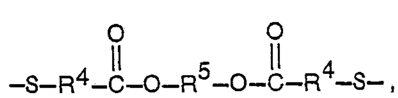, 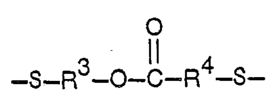,

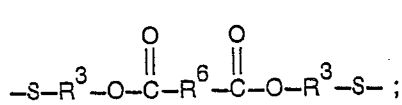 ;

R and $R^1$ are the same or different and are selected from alkyl, aryl, alkenyl, aralkyl, alkaryl, cycloalkyl, cycloalkenyl,

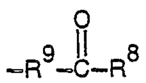, 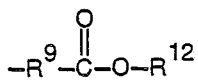, 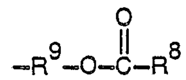, 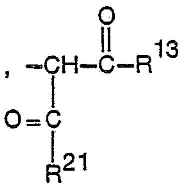, $-R^9-O-R^{12}$, and $-R^9-CN$ ;

$R^2$ is alkyl, alkenyl, aryl, aralkyl, cycloalkyl, cycloalkenyl,

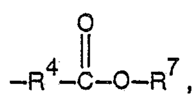, 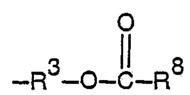,

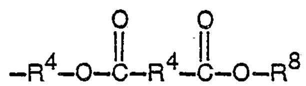, 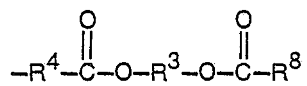, $-R^3-S-R^7$, or $-R^3-O-R^8$ ;

$R^3$ is alkylene of at least 2 carbon atoms, arylene, alkenylene of at least 2 carbon atoms, cycloalkylene, or cycloalkenylene,

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is —H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is —H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy; and

m = 1 or 2 and t = 0 or 1 with the proviso that m + t = 2; and

B. an organic compound or mixture of organic compounds selected from compounds having the following formulae:

(III) 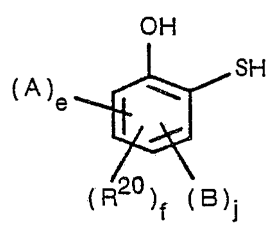 ,

(IV) 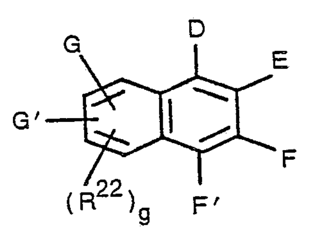 , or

(V) 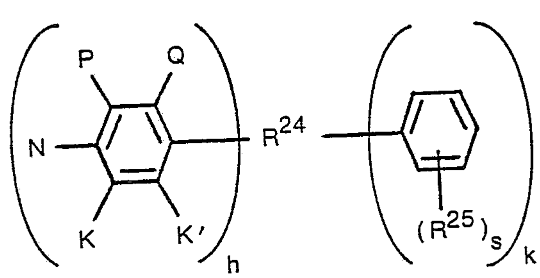

wherein

A is —H, —H or —SH,

B is —H, —OH or —SH,

D is —H, —SH, —OH or $R^{26}$

E is —H, —OH, —SH or $R^{26}$

F is —H, —SH, —OH or $R^{26}$

F' is —H, —OH, —SH or $R^{26}$

G is —H, —OH or —SH

G' is —H, —SH or —OH

K is —H, —SH, —OH or $R^{23}$

K' is —H, —OH, —SH or $R^{23}$

N is —H, —SH, —OH or $R^{23}$

P is —H, —SH, —OH or $R^{23}$

Q is —H, —SH, —OH or $R^{23}$

$R^{20}$ is —H, alkyl, aryl, alkenyl, alkaryl, cycloalkyl, alkoxy or halogen,

$R^{26}$ is alkyl, alkenyl or halogen

$R^{22}$ is alkyl, alkenyl or halogen

$R^{23}$ is alkyl, alkenyl or halogen

$R^{24}$ is alkylene or alkenylene

$R^{25}$ is alkyl, alkenyl, halogen, —SH or —OH

e is 0, 1 or 2

j is 0, 1 or 2

f is 0, 1, 2 or 3

s is 0, 1, 2 or 3

g is 0, 1, 2 or 3

h is 1, 2, 3 or 4

k is 0, 1, 2 or 3

h + k is 2, 3 or 4

e + j + f is 0, 1, 2, 3, or 4

with the proviso that 1) in formula (IV) two of groups D, E, F and F' must be an OH group and an SH group bonded directly to adjacent ring carbon atoms, and 2) in formula (V) two of groups K, K', N, P and Q must be an OH group and an SH group bonded directly to adjacent ring carbon atoms with or without,

(C) an organotin mercaptide or mixture of organotin mercaptides selected from compounds having the general formulae:

(VI) 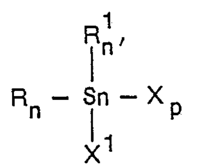 ,

(VII) 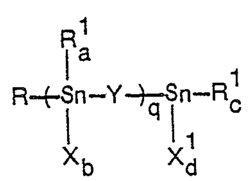 , and

(VIII) 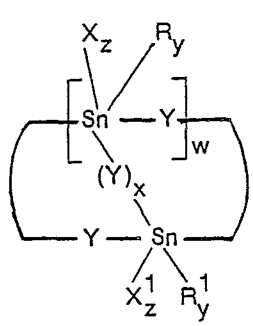

wherein

X is as previously defined and X and $X^1$ are the same or different and are selected from —Cl, —Br, —I, $—SR^2$,

$$-O-\overset{\overset{O}{\|}}{C}-R^8,$$

and $—O—R^8$ with the proviso that in formula (VIII) when z = 1 and in formulae (VI) and (VII) at least one X or $X^1$ is $—SR^2$;

Y is

$$-(S)_v-,\ -W-R^3-W^1-,\ -S-R^4-\overset{\overset{O}{\|}}{C}-O,\ S-R^4-\overset{\overset{O}{\|}}{C}-O-R^5-O-\overset{\overset{O}{\|}}{C}-R^4-S-,$$

$$-S-R^3-O-\overset{\overset{O}{\|}}{C}-R^4-S-,\ -S-R^3-O-\overset{\overset{O}{\|}}{C}-R^6-\overset{\overset{O}{\|}}{C}-O-R^3-S-,\ -O-\overset{\overset{O}{\|}}{C}-R^6-\overset{\overset{O}{\|}}{C}-O-,$$

$$-O-\overset{\overset{O}{\|}}{C}-R^6-\overset{\overset{O}{\|}}{C}-O-R^5-O-\overset{\overset{O}{\|}}{C}-R^6-\overset{\overset{O}{\|}}{C}-O,\ \text{or}\ -S-\underset{\underset{R^{27}}{|}}{CH}-(\underset{\underset{R^{27}}{|}}{CH})_i-O-\overset{\overset{O}{\|}}{C}-(\underset{\underset{R^{27}}{|}}{CH})_i\ ;$$

R, $R^1$, $R^2$, $R^3$, $R^4$, $R^5$, $R^6$, $R^8$, W and $W^1$ are as previously defined;

$R^{27}$ is

$$-\overset{\overset{O}{\|}}{C}-O-R^{16},$$

$$-O-\overset{\overset{O}{\|}}{C}-R^{16},$$

—OH, —SH, aryl, $C_1$ to $C_{18}$ alkyl or —H;

$R^{16}$ is —H or $R^8$;

i = 0 or an integer from 1 to 6 inclusive;

$n = 0, 1$ or $2$, $n' = 0, 1$ or $2$ and $p = 1$ or $2$ with the proviso that $n + n' = 1$ or $2$ and $n + n' + p = 3$;

$a = 0, 1$ or $2$, $b = 0, 1$ or $2$, $q = 1$ to $5$, $c = 1, 2$ or $3$ and $d = 0, 1$ or $2$ with the proviso that $a + b = 2$ and $c + d = 3$;

v = an integer from 1 to 8 inclusive; and

$w = 0, 1$ or $2$, $x = 0$ or $1$, $y = 1$ or $2$, $z = 0$ or $1$ with the proviso that when $x = 0$ then $y + z = 2$, when $x = 1$ then $y = 1$, $z = 0$ and $w = 1$, when $w = 2$ then $x = 0$ and when $w = 0$ then $y + z = 2$, $x = 0$ and Y is $—W—R^3—W^1$ or

$$-S-R^4-\overset{\overset{O}{\|}}{C}-O.$$

2. The composition claimed in claim 1 further characterised in that in formula (I) R is methyl, butyl, or octyl and W is sulfur.

3. The composition claimed in claim 1 further characterised in that in formula (II) $R^1$ is methyl or butyl, W is sulfur, X is $—SR^2$ where $R^2$ is

$$-R^4\overset{\overset{O}{\|}}{C}OR^7,\ m = 1 \text{ and } t = 1.$$

4. The composition claimed in claim 1 further characterised in that in formula (IIa) R and $R^1$ are methyl, butyl, octyl or

$$-R^9-\overset{O}{\overset{\|}{C}}-O-R^{12};$$

W and W′ are oxygen or sulfur; and Z is

$$-S-R^3-O-\overset{O}{\overset{\|}{C}}-R\ -\overset{O}{\overset{\|}{C}}-O-R^3-S,\quad -S-R^3-O-\overset{O}{\overset{\|}{C}}-R^4-S-\quad \text{or}\quad -S-R^4-\overset{O}{\overset{\|}{C}}-O-R^5-O-\overset{O}{\overset{\|}{C}}-R^4-S.$$

5. The composition claimed in any preceding claim further characterised in that in formula (III) A is nothing, B is nothing, $R^{20}$ is alkyl, e = 0, f = 1 and j = 0.

6. The composition claimed in any preceding claim further characterised in that the organic compound (B) is o-hydroxythiophenol.

7. The composition claimed in any preceding claim further characterised in that in formula (VI) R is methyl or butyl, $R^1$ is methyl or butyl, X is $-SR^2$ where $R^2$ is

$$-R^4\overset{O}{\overset{\|}{C}}OR^7,$$

$X^1$ is $-SR^2$ where $R^2$ is

$$-R^4\overset{O}{\overset{\|}{C}}OR^7,$$

n = 1, n′ = 1 and p = 1.

8. The composition claimed in any one of claims 1 to 6 further characterised in that in formula (VII) R is methyl, X is $-SR^2$ where $R^2$ is

$$-R^4\overset{O}{\overset{\|}{C}}OR^7,$$

$R^1$ is methyl, $X^1$ is $-SR^2$ where $R^2$ is

$$-R^4\overset{O}{\overset{\|}{C}}OR^7,$$

Y is —S—, a = 1, b = 1, c = 2, d = 1 and q = 1.

9. The composition claimed in any one of claims 1 to 6 further characterised in that in formula (VIII) R is methyl, $R^1$ is methyl, X is $-SR^2$ where $R^2$ is

$$-R^4\overset{O}{\overset{\|}{C}}OR^7,$$

$X^1$ is $-SR^2$ where $R^2$ is

$$-R^4\overset{O}{\overset{\|}{C}}OR^7,$$

Y is —S—, W = 1, x = 0, y = 1 and z = 1.

10. The composition claimed in any preceding claim further characterised in that the weight ratio of organic tin compound or mixture of organic tin compounds (A) to organic compound or mixture of organic compounds (B) is from 400:1 to 1:199.

11. The composition claimed in claim 10, further characterised in that the said weight ratio is from 400:1 to 1:100.

12. The composition claimed in claim 11, characterised in that said weight ratio is 400:1 to 1:20.

13. The composition claimed in any preceding claim further characterised in that the weight ratio of organic tin compound or mixture of organic tin compounds (A) to organotin mercaptide or mixture or organotin mercaptides (C) is from 99:1 to 1:99.

14. A polymer composition comprising a halogen-containing organic polymer normally susceptible to heat induced deterioration and characterised in that is contains a stabilizing amount of a composition according to any of claims 1 to 13.

15. A shaped article of manufacture such as a pipe comprising a halogen-containing organic polymer normally susceptible to heat induced deterioration and characterised in that it contains a stabilizing amount of a composition according to any of claims 1 to 13.

16. A process for producing a stabilizing composition for a halogen-containing organic polymer characterised in that it comprises mixing:

(A) an organic tin compound or mixture of organic tin compounds selected from compounds having the general formulae:

(I) 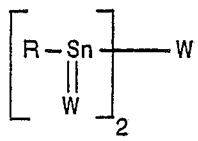

(II) 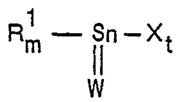 and

(IIa) 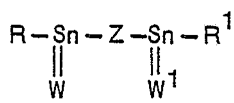

wherein

W and $W^1$ are the same or different and are oxygen or sulfur;

X is selected from

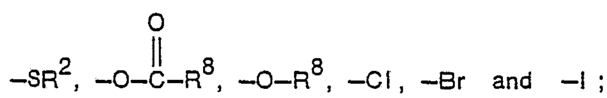

Z is 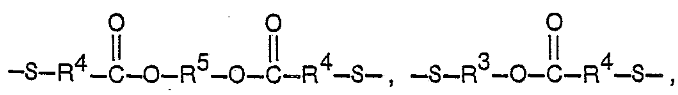

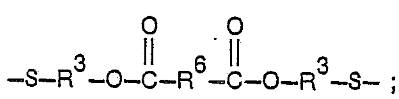

R and $R^1$ are the same or different and are selected from alkyl, aryl, alkenyl, aralkyl, alkaryl, cycloalkyl, cycloalkenyl,

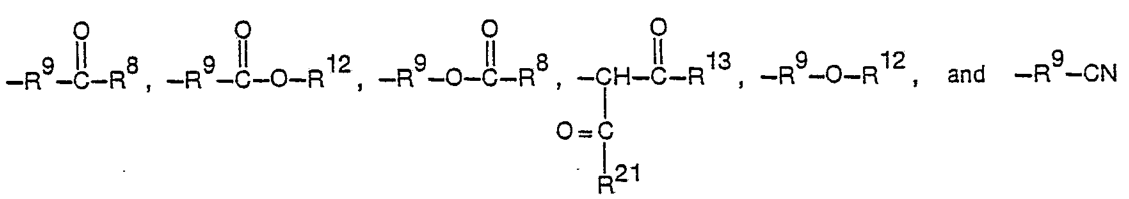

$R^2$ is alkyl, alkenyl, aryl, aralkyl, cycloalkyl, cycloalkenyl,

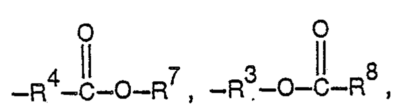

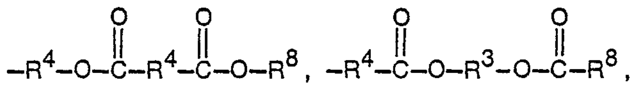, $-R^3-S-R^7$, or $-R^3-O-R^8$;

$R^3$ is alkylene of at least 2 carbon atoms, arylene, alkenylene of at least 2 carbon atoms, cycloalkylene, or cycloalkenylene,

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is —H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is —H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy; and

m = 1 or 2 and t = 0 or 1 with the proviso that m + t = 2; and

B. an organic compound or mixture of organic compounds selected from compounds having the following formulae:

(III) 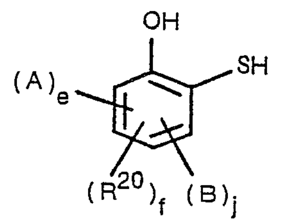 ,

(IV) 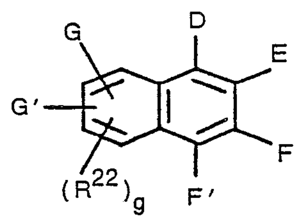 , or

(V) 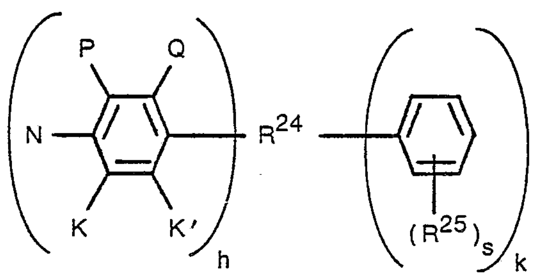

wherein

A is —H, —H or —SH,

B is —H, —OH or —SH,

D is —H, —SH, —OH or $R^{26}$

E is —H, —OH, —SH or $R^{26}$

F is —H, —SH, —OH or $R^{26}$

F' is —H, —OH, —SH or $R^{26}$

G is —H, —OH or —SH

G' is —H, —SH or —OH

K is —H, —SH, —OH or $R^{23}$

K' is —H, —OH, —SH or $R^{23}$

N is —H, —SH, —OH or $R^{23}$

P is —H, —SH, —OH or $R^{23}$

Q is —H, —SH, —OH or $R^{23}$

$R^{20}$ is —H alkyl, aryl, alkenyl, alkaryl, cycloalkyl, alkoxy or halogen,
$R^{26}$ is alkyl, alkenyl or halogen
$R^{22}$ is alkyl, alkenyl or halogen
$R^{23}$ is alkyl, alkenyl or halogen
$R^{24}$ is alkylene or alkenylene
$R^{25}$ is alkyl, alkenyl, halogen, —SH or —OH
e is 0, 1 or 2
j is 0, 1 or 2
f is 0, 1, 2 or 3
s is 0, 1, 2 or 3
g is 0, 1, 2 or 3
h is 1,
k is 0, 1, 2 or 3
h + k is 2, 3 or 4
e + j + f is 0, 1, 2, 3, or 4

with the proviso that 1) in formula (IV) two of groups D, E, F and F′ must be an OH group and an SH group bonded directly to adjacent ring carbon atoms, and 2) in formula (V) two of groups K, K′, N, P and Q must be an OH group and an SH group bonded directly to adjacent ring carbon atoms with or without,

(C) an organotin mercaptide or mixture of organotin mercaptides selected from compounds having the general formulae:

(VI) 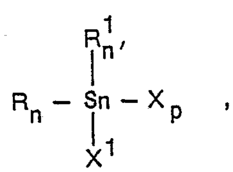 ,

(VII) 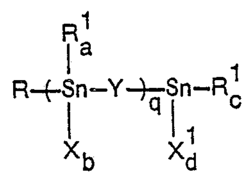 , and

(VIII) 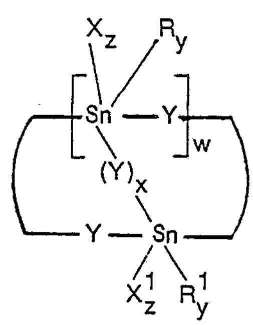

wherein

X is as previously defined and X and $X^1$ are the same or different and are selected from —Cl, —Br, —I, —$SR^2$,

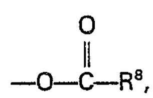,

and —O—$R^8$ with the proviso that in formula (VIII) when z = 1 and in formulae (VI) and (VII) at least one X or $X^1$ is —$SR^2$;

Y is

$-(S)_v-$, $-W-R^3-W^1-$, 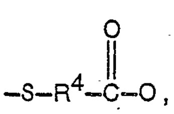, 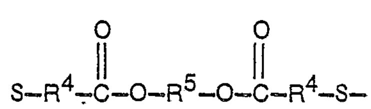,

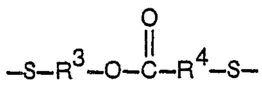, 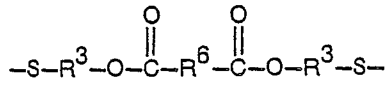, 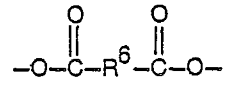,

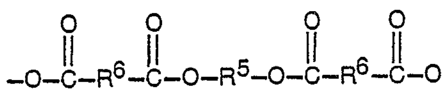, or 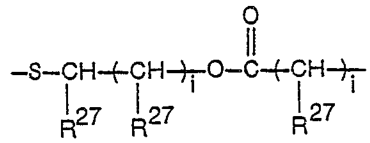 ;

R, $R^1$, $R^2$, $R^3$, $R^4$, $R^5$, $R^6$, $R^8$, W and $W^1$ are as previously defined;
$R^{27}$ is

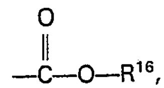

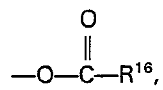

—OH, —SH, aryl, $C_1$ to $C_{18}$ alkyl or —H;
$R^{16}$ is —H or $R^8$;
i = 0 or an integer from 1 to 6 inclusive;
n = 0, 1 or 2, n′ = 0, 1 or 2 and p = 1 or 2 with the proviso that n + n′ = 1 or 2 and n + n′ + p = 3;
a = 0, 1 or 2, b = 0, 1 or 2, q = 1 to 5, c = 1, 2 or 3 and d = 0, 1 or 2 with the proviso that a + b = 2 and c + d = 3;
v = an integer from 1 to 8 inclusive; and
w = 0, 1 or 2, x = 0 or 1, y = 1 or 2, z = 0 or 1 with the proviso that when x = 0 then y + z = 2, when x = 1 then y = 1, z = 0 and w = 1, when w = 2 then x = 0 and when w = 0 then y + z = 2, x = 0 and Y is —W—$R^3$—$W^1$ or

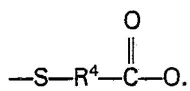

17. The process claimed in claim 16, further characterised in that in formula (I) R is methyl, butyl, or octyl and W is sulfur.

18. The process claimed in claim 16, further characterised in that in formula (II) $R^1$ is methyl or butyl, W is sulfur, X is —$SR^2$ where $R^2$ is

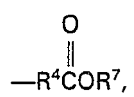

m = 1 and t = 1.

19. The process claimed in claim 16, further characterised in that in formula (IIa) R and $R^1$ are methyl, butyl octyl or

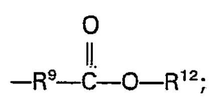

W and $W^1$ are oxygen or sulfur; and Z is

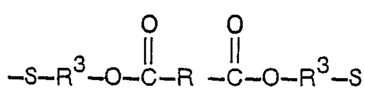, 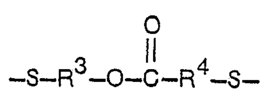 or 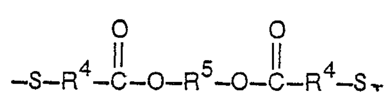

20. The process claimed in any one of claims 16 to 18 further characterised in that in formula (III) A is nothing, B is nothing, $R^{20}$ is alkyl, e = 0, f = 1 and j = 0.

21. The process claimed in any one of claims 16 to 19, further characterised in that the organic compound (B) is o-hydroxythiophenol.

22. The process claimed in any one of claims 16 to 21, further characterised in that in formula (VI) R is methyl or butyl, $R^1$ is methyl or butyl, X is $-SR^2$ where $R^2$ is

$$-R^4\overset{\overset{\displaystyle O}{\|}}{C}OR^7,$$

$X^1$ is $-SR^2$ where $R^2$ is

$$-R^4\overset{\overset{\displaystyle O}{\|}}{C}OR^7,$$

n = 1, n′ = 1 and p = 1.

23. The process as claimed in any one of claims 16 to 21, further characterised in that in formula (VII) R is: methyl, X is $-SR^2$ where $R^2$ is

$$-R^4\overset{\overset{\displaystyle O}{\|}}{C}OR^7,$$

$R^1$ is methyl, $X^1$ is $-SR^2$ where $R^2$ is

$$-R^4\overset{\overset{\displaystyle O}{\|}}{C}OR^7,$$

Y is —S—, a = 1, b = 1, c = 2, d = 1 and q = 1.

24. The process claimed in any one of claims 16 to 21, further characterised in that in formula (VIII) R is methyl, $R^1$ is methyl, X is $-SR^2$ where $R^2$ is

$$-R^4\overset{\overset{\displaystyle O}{\|}}{C}OR^7,$$

$X^1$ is $-SR^2$ where $R^2$ is

$$-R^4\overset{\overset{\displaystyle O}{\|}}{C}OR^7,$$

Y is —S—, W = 1, x = 0, y = 1 and z = 1.

25. The process claimed in any one of claims 16 to 24, further characterised in that the weight ratio of organic tin compound or mixture of organic tin compounds (A) to organic compound or mixture of organic compounds (B) is from 400:1 to 1:199.

26. The process claimed in claim 25, further characterised in that the weight ratio of organic tin compound or mixture of organic tin compounds (A) to organic compound or mixture of organic compounds (B) is from 400:1 to 1:100.

27. The process claimed in claim 26, characterised in that said weight ratio is from 400:1 to 1:20.

28. The process claimed in any one of claims 16 to 27, further characterised in that the weight ratio of organic tin compound or mixture of organic tin compounds (A) to organotin mercaptide or mixture or organotin mercaptides (C) is from 99:1 to 1:99.

29. A process for stabilising a halogen-containing organic polymer normally susceptible to heat induced deterioration, characterised by adding to said polymer a stabilising amount of a composition made by a process according to any of claims 16 to 23.

30. A process for forming a shaped article of manufacture which comprises shaping a stabilised polymer composition produced by a process according to claim 29.

**Claims for the Contracting State: AT**

1. A process for producing a stabilizing composition for a halogen-containing organic polymer characterised in that it comprises mixing:

(A) an organic tin compound or mixture of organic tin compounds selected from compounds having the general formulae:

(I) 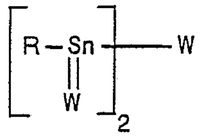

(II) 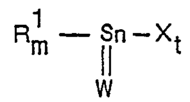 and

(IIa) 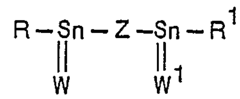

wherein

W and $W^1$ are the same or different and are oxygen or sulfur;

X is selected from

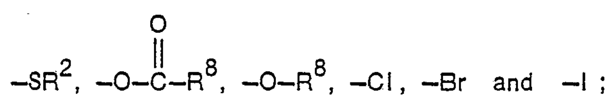

and ;

Z is 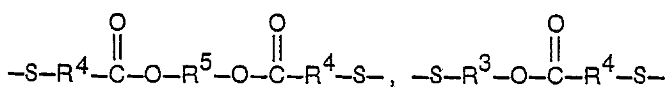 ,

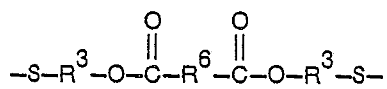 ;

R and $R^1$ are the same or different and are selected from alkyl, aryl, alkenyl, aralkyl, alkaryl, cycloalkyl, cycloalkenyl,

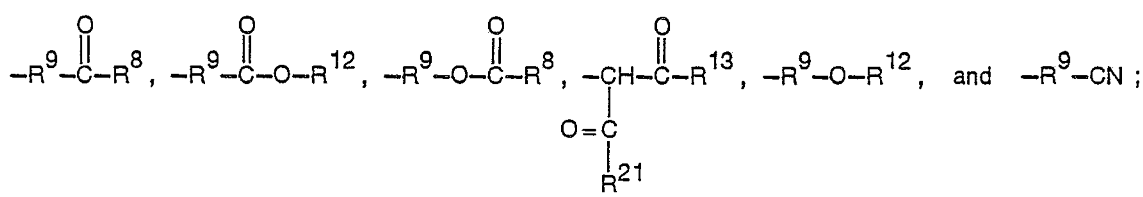

and ;

$R^2$ is alkyl, alkenyl, aryl, aralkyl, cycloalkyl, cycloalkenyl,

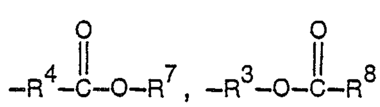 ,

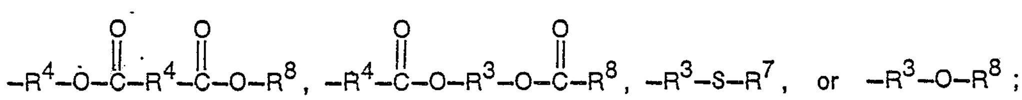

or ;

$R^3$ is alkylene of at least 2 carbon atoms, arylene, alkenylene of at least 2 carbon atoms, cycloalkylene, or cycloalkenylene,

$R^4$ is alkylene, arylene, alkenylene of at least 2 carbon atoms, cycloalkylene, or cycloalkenylene;

$R^5$ is $R^3$;

$R^6$ is a carbon to carbon single bond or $R^4$;

$R^7$ is —H or $R^8$;

$R^8$ is alkyl, alkenyl, aryl, aralkyl, alkaryl, cycloalkyl, or cycloalkenyl;

$R^9$ is $C_1$ to $C_4$ alkylene;

$R^{12}$ is —H or a monovalent $C_1$ to $C_{20}$ hydrocarbon radical;

$R^{13}$ and $R^{21}$ are the same or different and are each $C_1$ to $C_{20}$ alkyl or $C_1$ to $C_{20}$ alkoxy; and

m = 1 or 2 and t = 0 or 1 with the proviso that m + t = 2; and

B. an organic compound or mixture of organic compounds selected from compounds having the following formulae:

(III) 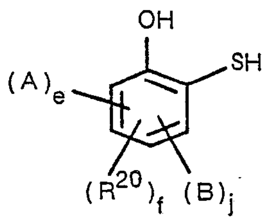 ,

(IV) 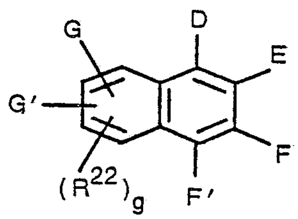 , or

(V) 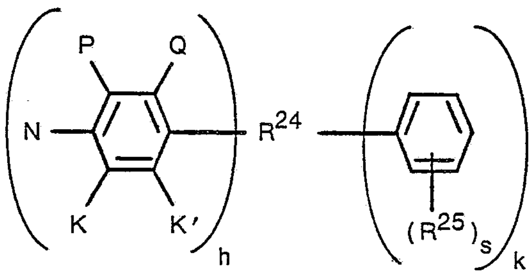

wherein

A is —H, —H or —SH,

B is —H, —OH or —SH,

D is —H, —SH, —OH or $R^{26}$

E is —H, —OH, —SH or $R^{26}$

F is —H, —SH, —OH or $R^{26}$

F' is —H, —OH, —SH or $R^{26}$

G is —H, —OH or —SH

G' is —H, —SH or —OH

K is —H, —SH, —OH or $R^{23}$

K' is —H, —OH, —SH or $R^{23}$

N is —H, —SH, —OH or $R^{23}$

P is —H, —SH, —OH or $R^{23}$

Q is —H, —SH, —OH or $R^{23}$

$R^{20}$ is —H alkyl, aryl, alkenyl, alkaryl, cycloalkyl, alkoxy or halogen,

$R^{26}$ is alkyl, alkenyl or halogen

$R^{22}$ is alkyl, alkenyl or halogen

$R^{23}$ is alkyl, alkenyl or halogen

$R^{24}$ is alkylene or alkenylene
$R^{25}$ is alkyl, alkenyl, halogen, —SH or —OH
e is 0, 1 or 2
j is 0, 1 or 2
f is 0, 1, 2 or 3
s is 0, 1, 2 or 3
g is 0, 1, 2 or 3
h is 1, 2, 3 or 4
k is 0, 1, 2 or 3
h + k is 2, 3 or 4
e + j + f is 0, 1, 2, 3 or 4

with the proviso that 1) in formula (IV) two of groups D, E, F and F′ must be an OH group and an SH group bonded directly to adjacent ring carbon atoms, and 2) in formula (V) two of groups K, K′, N, P and Q must be an OH group and an SH group bonded directly to adjacent ring carbon atoms with or without,

(C) an organotin mercaptide or mixture of organotin mercaptides selected from compounds having the general formulae:

(VI) 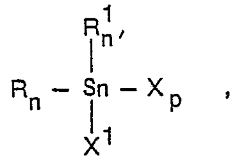 ,

(VII) 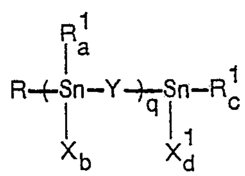 , and

(VIII) 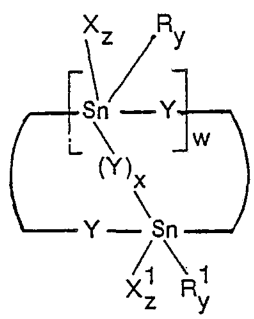

wherein

X is as previously defined and X and $X^1$ are the same or different and are selected from —Cl, —Br, —I, —$SR^2$,

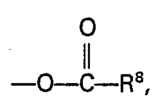

and —O—$R^8$ with the proviso that in formula (VIII) when z = 1 and in formulae (VI) and (VII) at least one X or $X^1$ is —$SR^2$;

Y is

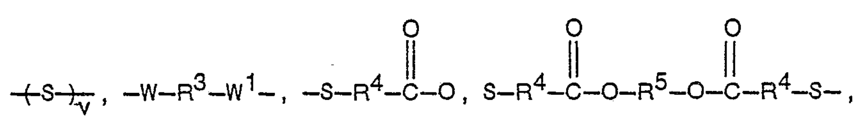

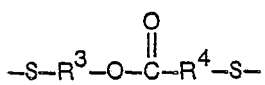, 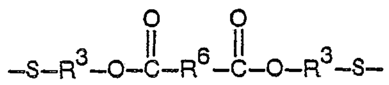, 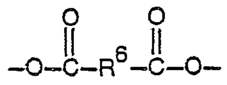,

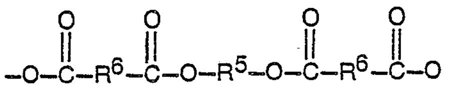, or 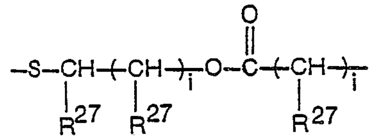 ;

R, $R^1$, $R^2$, $R^3$, $R^4$, $R^5$, $R^6$, $R^8$, W and $W^1$ are as previously defined;
$R^{27}$ is

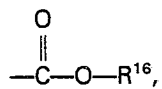,

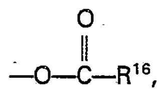,

—OH, —SH, aryl, $C_1$ to $C_{18}$ alkyl or —H;
$R^{16}$ is —H or $R^8$;
i = 0 or an integer from 1 to 6 inclusive;
n = 0, 1 or 2, n' = 0, 1 or 2 and p = 1 or 2 with the proviso that n + n' = 1 or 2 and n + n' + p = 3;
a = 0, 1 or 2, b = 0, 1 or 2, q = 1 to 5, c = 1, 2 or 3 and d = 0, 1 or 2 with the proviso that a + b = 2 and c + d = 3;
v = an integer from 1 to 8 inclusive; and
w = 0, 1 or 2, x = 0 or 1, y = 1 or 2, z = 0 or 1 with the proviso that when x = 0 then y + z = 2, when x = 1 then y = 1, z = 0 and w = 1, when w = 2 then x = 0 and when w = 0 then y + z = 2, x = 0 and Y is —W—$R^3$—$W^1$ or

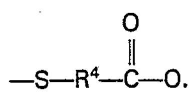.

2. The process claimed in claim 1 further characterised in that in formula (I) R is methyl, butyl, or octyl and W is sulfur.

3. The process claimed in claim 1 further characterised in that in formula (II) $R^1$ is methyl or butyl, W is sulfur, X is —$SR^2$ where $R^2$ is

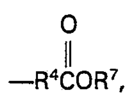, m = 1 and t = 1.

4. The process claimed in claim 1 further characterised in that in formula (IIa) R and $R^1$ are methyl, butyl, octyl or

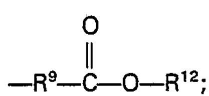;

W and $W^1$ are oxygen or sulfur; and Z is

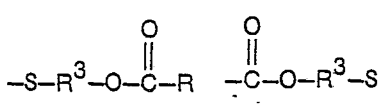, 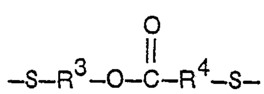 or 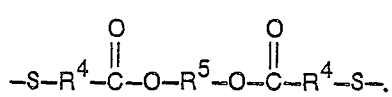.

5. The process claimed in any preceding claim further characterised in that in formula (III) A is nothing, B is nothing, $R^{20}$ is alkyl, e = 0, f = 1 and j = 0.

6. The process claimed in any preceding claim further characterised in that the organic compound (B) is o-hydroxythiophenol.

7. The process claimed in any preceding claim further characterised in that in formula (VI) R is methyl or butyl, $R^1$ is methyl or butyl, X is $—SR^2$ where $R^2$ is

$$-R^4\overset{O}{\overset{\|}{C}}OR^7,$$

$X^1$ is $—SR^2$ where $R^2$ is

$$-R^4\overset{O}{\overset{\|}{C}}OR^7,$$

n = 1, n' = 1 and p = 1.

8. The process claimed in any one of claims 1 to 6 further characterised in that in formula (VII) R is methyl, X is $—SR^2$ where $R^2$ is

$$-R^4\overset{O}{\overset{\|}{C}}OR^7,$$

$R^1$ is methyl, $X^1$ is $—SR^2$ where $R^2$ is

$$-R^4\overset{O}{\overset{\|}{C}}OR^7,$$

Y is —S—, a = 1, b = 1, c = 2, d = 1 and q = 1.

9. The process claimed in any one of claims 1 to 6 further characterised in that in formula (VIII) R is methyl, $R^1$ is methyl, X is $—SR^2$ where $R^2$ is

$$-R^4\overset{O}{\overset{\|}{C}}OR^7,$$

$X^1$ is $—SR^2$ where $R^2$ is

$$-R^4\overset{O}{\overset{\|}{C}}OR^7,$$

Y is —S—, W = 1, x = 0, y = 1 and z = 1.

10. The process claimed in any preceding claim further characterised in that the weight ratio of organic tin compound or mixture of organic tin compounds (A) to organic compound or mixture of organic compounds (B) is from 400:1 to 1:199.

11. The process claimed in claim 10, further characterised in that the weight ratio of organic tin compound or mixture of organic tin compounds (A) to organic compound or mixture of organic compounds (B) is from 400:1 to 1:100.

12. The process claimed in claim 11, characterised in that said weight ratio is from 400:1 to 1:20.

13. The process claimed in any preceding claim further characterised in that the weight ratio of organic tin compound or mixture of organic tin compounds (A) to organotin mercaptide or mixture of organotin mercaptides (C) is from 99:1 to 1:99.

14. A process for stabilising a halogen-containing organic polymer normally susceptible to heat induced deterioration, characterised by adding to said polymer a stabilizing amount of a composition according to any of claims 1 to 13.

15. A process for forming a shaped article of manufacture which comprises shaping a stabilized polymer composition produced by a process according to claim 14.

16. A shaped article of manufacture such as a pipe comprising a halogen-containing organic polymer normally susceptible to head induced deterioration and characterised in that it contains a stabilizing amount of a composition made by a process according to any of claims 1 to 13.

**Patentansprüche für die Vertragsstaaten: BE CH DE FR GB IT LI NL SE**

1. Zusammensetzung zur Stabilisierung eines halogenhaltigen Polymers gegen die zersetzenden Effekte der Wärmeeinwirkung, dadurch gekennzeichnet, daß sie

(A) eine organische Zinnverbindung oder ein Gemisch organischer Zinnverbindungen der allgemeinen Formeln

(I) 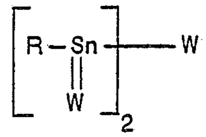

(II) 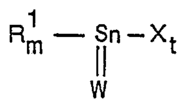 und

(IIa) 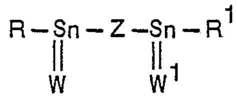

worin

W und $W^1$ gleich oder unterschiedlich sind und Sauerstoff oder Schwefel darstellen,

X ausgewählt ist unter

$-SR^2$, 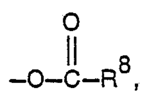, $-O-R^8$, $-Cl$, $-Br$ und $-J$ ;

Z ausgewählt ist unter

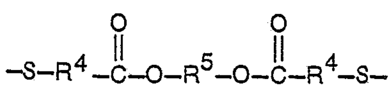, 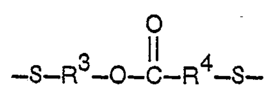,

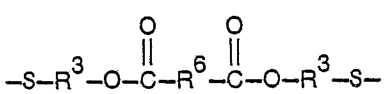 ;

R und $R^1$ gleich oder unterschiedlich sind und unter Alkyl, Aryl, Alkenyl, Aralkyl, Alkaryl, Cycloalkyl, Cycloalkenyl,

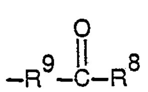, 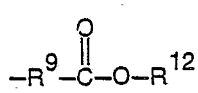, 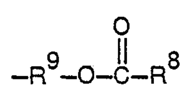, 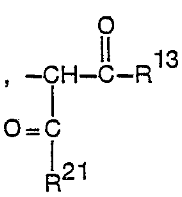, $-R^9-O-R^{12}$

und $-R^9-CN$ ; ausgewählt sind,

$R^2$ für Alkyl, Alkenyl, Aryl, Aralkyl, Cycloalkyl, Cycloalkenyl,

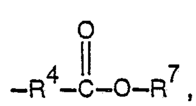, 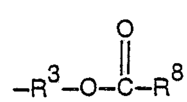,

$$-R^4-O-\overset{O}{\overset{\|}{C}}-R^4-\overset{O}{\overset{\|}{C}}-O-R^8,\ -R^4-\overset{O}{\overset{\|}{C}}-O-R^3-O-\overset{O}{\overset{\|}{C}}-R^8,\ -R^3-S-R^7 \text{ oder } -R^3-O-R^8\ ;$$

$R^3$ einen Alkylenrest mit mindestens 2 Kohlenstoffatomen, einen Arylenrest, einen Alkenylenrest mit mindestens 2 Kohlenstoffatomen, einen Cycloalkylenrest oder einen Cycloalkenylenrest darstellt,

$R^4$ einen Alkylen-, Arylen-, Alkenylenrest mit mindestens 2 Kohlenstoffatomen, einen Cycloalkylen- oder Cycloalkenylenrest bedeutet,

$R^5$ gleich $R^3$ ist,

$R^6$ eine Kohlenstoff-Kohlenstoff-Einfachbindung bedeutet oder gleich $R^4$ ist,

$R^7$ für —H oder $R^8$ steht,

$R^8$ einen Alkyl-, Alkenyl-, Aryl-, Aralkyl-, Alkaryl-, Cycloalkyl- oder Cycloalkenylrest darstellt,

$R^9$ einen $C_1$- bis $C_4$-Alkylenrest bedeutet,

$R^{12}$ ein H-Atom oder einen monovalenten $C_1$- bis $C_{20}$-Kohlenwasserstoffrest darstellt,

$R^{13}$ und $R^{21}$ gleich oder unterschiedlich sind und jeweils einen $C_1$- bis $C_{20}$-Alkylrest oder $C_1$- bis $C_{20}$-Alkoxyrest bedeuten, und

m gleich 1 oder 2 ist und t = 0 oder 1 gilt, mit der Maßgabe, daß m + t = 2 ist, und

(B) eine organische Verbindung oder ein Gemisch organischer Verbindungen, ausgewählt unter den Verbindungen der folgenden allgemeinen Formeln

(III) 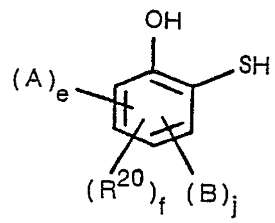 ,

(IV) 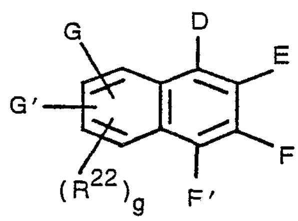 , oder

(V) 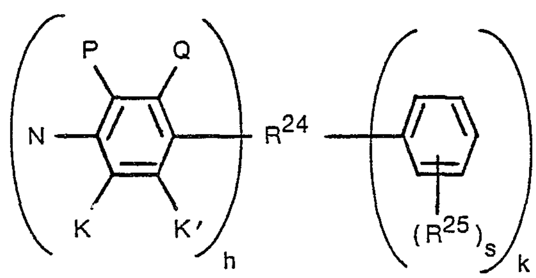

worin

A gleich —H, —OH oder —SH ist,

B gleich —H, —OH oder —SH ist,

D gleich —H, —SH, —OH oder $R^{26}$ ist,

E gleich —H, —OH, —SH oder $R^{26}$ ist,

F gleich —H, —SH, —OH oder $R^{26}$ ist,

F' gleich —H, —OH, —SH oder $R^{26}$ ist,

G gleich —H, —OH oder —SH ist,

G' gleich —H, —SH, oder —OH ist,

K gleich —H, —SH, —OH oder $R^{23}$ ist,

K' gleich —H, —OH, —SH oder $R^{23}$ ist,

N gleich —H, —SH, —OH oder $R^{23}$ ist,

P gleich —H, —SH, —OH oder $R^{23}$ ist,

Q gleich —H, —SH, —OH oder $R^{23}$ ist,
$R^{20}$ gleich —H, Alkyl, Aryl, Alkenyl, Alkaryl, Cycloalkyl, Alkoxy oder Halogen ist,
$R^{26}$ gleich Alkyl, Alkenyl oder Halogen ist,
$R^{22}$ gleich Alkyl, Alkenyl oder Halogen ist,
$R^{23}$ gleich Alkyl, Alkenyl oder Halogen ist,
$R^{24}$ gleich Alkylen oder Alkenylen ist,
$R^{25}$ gleich Alkyl, Alkenyl, Halogen, —SH oder —OH ist,
e für 0, 1 oder 2 steht,
j für 0, 1 oder 2 steht,
f für 0, 1, 2 oder 3 steht,
s für 0, 1, 2 oder 3 steht,
g für 0, 1, 2 oder 3 steht,
h für 1, 2, 3 oder 4 steht,
k für 0, 1, 2 oder 3 steht
h + k gleich 2, 3 oder 4 ist,
e + j + f gleich 0, 1, 2, 3 oder 4 ist,

mit der Maßgabe, daß 1) in Formel (IV) zwei der Reste D, E, F und F′ eine OH-Gruppe und eine SH-Gruppe, die direkt an benachbarte Ring-Kohlenstoffatome gebunden sind, sein müssen, und

2) in Formel (V) zwei der Reste K, K′, N, P und Q eine OH-Gruppe und eine SH-Gruppe, die direkt an benachbarte Ring-Kohlenstoffatome gebunden sind, sein müssen,

mit oder ohne

(C) einem Organozinnmercaptid oder einem Gemisch von Organozinnmercaptiden, ausgewählt unter Verbindungen oder folgenden allgemeinen Formeln

(VI) 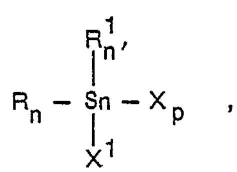 ,

(VII) 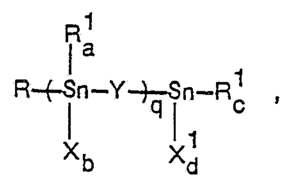 , und

(VIII) 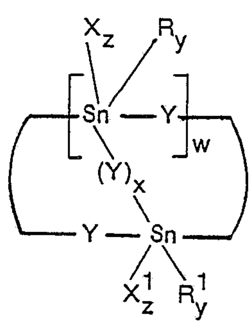

worin X die vorstehend beschriebene Bedeutung hat und X und X′ gleich oder unterschiedlich sind und unter —Cl, —Br, —J, —$SR^2$,

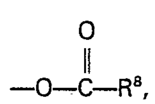

und —O—$R^8$ ausgewählt sind, mit der Maßgabe, daß in Formel (VIII), sofern z = 1 gilt und in den Formeln (VI) und (VII) mindestens ein X oder $X^1$ gleich —$SR^2$ ist, Y gleich

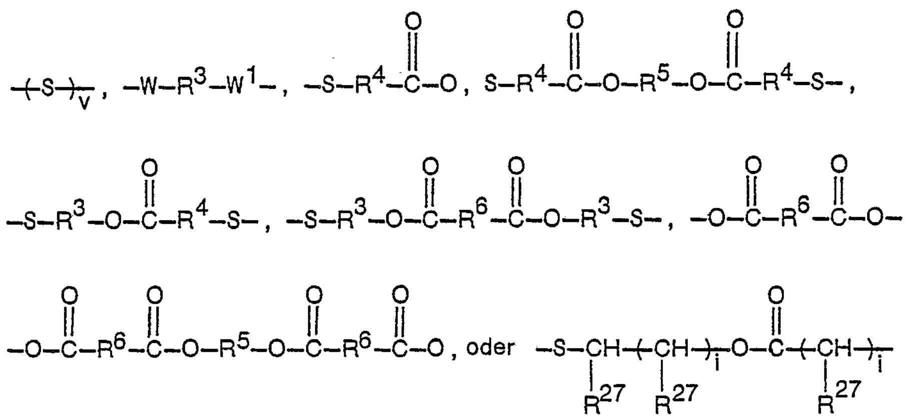

oder ist,

R, $R^1$, $R^2$, $R^3$, $R^4$, $R^5$, $R^6$, $R^8$, W und $W^1$ der voranstehenden Definition entsprechen, $R^{27}$ für

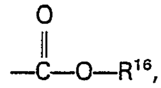

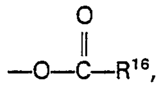

—OH, —SH, Aryl, $C_1$- bis $C_{18}$-Alkyl oder —H steht,

$R^{16}$ gleich —H oder $R^8$ ist,

i = 0 oder eine ganze Zahl von 1 bis einschließlich 6 ist,

n = 0, 1 oder 2 ist, n' = 0, 1 oder 2 ist und p = 1 oder 2 ist mit der Maßgabe, daß n + n' = 1 oder 2 ist und n + n' + p = 3 ist

a = 0, 1 oder 2 ist, b = 0, 1 oder 2 ist, q = 1 bis 5 ist, c = 1, 2 oder 3 ist und d = 0, 1 oder 2 ist, mit der Maßgabe, daß a + b = 2 und c + d = 3 gilt,

v eine ganze Zahl von 1 bis einschließlich 8 darstellt, und

w = 0, 1 oder 2 ist, x = 0 oder 1 ist, y = 1 oder 2 ist, z = 0 oder 1 ist, mit der Maßgabe, daß sofern x = 0 gilt, y + z = 2 ist, wenn x = 1 ist, y = 1, z = 0 und w = 1 gilt, wenn w = 2 gilt, x = 0 ist und wenn w = 0 gilt, y + z = 2, x = 0 und Y gleich —W—$R^3$—$W^1$ oder

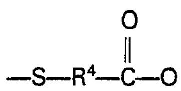 ist,

enthält.

2. Zusammensetzung nach Anspruch 1, weiter dadurch gekennzeichnet, daß in der Formel (I) R für Methyl, Butyl oder Octyl und W für Schwefel stehen.

3. Zusammensetzung nach Anspruch 1, ferner dadurch gekennzeichnet, daß in Formel (II) $R^1$ gleich Methyl oder Butyl ist, W ein Schwefelatom darstellt, X für —$SR^2$ steht, worin $R^2$ der Rest

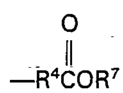

ist, m = 1 gilt und t = 1 ist.

4. Zusammensetzung nach Anspruch 1, ferner dadurch gekennzeichnet, daß in Formel (IIa) R und $R^1$ die Reste Methyl, Butyl, Octyl oder

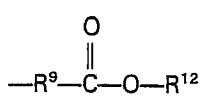

sind, W und $W^1$ jeweils ein Sauerstoff- oder Schwefelatom darstellen, und Z den Rest

$$-S-R^3-O-\overset{O}{\overset{\|}{C}}-R\,,\ -\overset{O}{\overset{\|}{C}}-O-R^3-S\,,\ -S-R^3-O-\overset{O}{\overset{\|}{C}}-R^4-S-$$

$$\text{oder } -S-R^4-\overset{O}{\overset{\|}{C}}-O-R^5-O-\overset{O}{\overset{\|}{C}}-R^4-S-\text{bedeutet}.$$

5. Zusammensetzung nach einem der voranstehenden Ansprüche, ferner dadurch gekennzeichnet, daß in der Formel (III) A nichts ist, B nichts ist, $R^{20}$ einen Alkylrest bedeutet, $e = 0$, $f = 1$ und $j = 0$ gelten.

6. Zusammensetzung nach einem der voranstehenden Ansprüche, ferner dadurch gekennzeichnet, daß die organische Verbindung (B) o-Hydroxythiophenol ist.

7. Zusammensetzung nach einem der voranstehenden Ansprüche, weiter dadurch gekennzeichnet, daß in Formel (VI) R für einen Methyl- oder Butylrest steht, $R^1$ einen Methyl- oder Butylrest darstellt, X für —$SR^2$ steht, worin $R^2$ den Rest

$$-R^4\overset{O}{\overset{\|}{C}}OR^7$$

bedeutet, $X^1$ der Rest —$SR^2$ ist, worin $R^2$ den Rest

$$-R^4\overset{O}{\overset{\|}{C}}OR^7$$

darstellt, $n = 1$, $n' = 1$ und $p = 1$ gelten.

8. Zusammensetzung nach einem der Ansprüche 1 bis 6, ferner dadurch gekennzeichnet, daß in Formel (VII) R für Methyl steht, X gleich —$SR^2$ ist, worin $R^2$ für

$$-R^4\overset{O}{\overset{\|}{C}}OR^7$$

steht, $R^1$ ein Methylrest ist, $X^1$ gleich —$SR^2$ ist, worin $R^2$ für

$$-R^4\overset{O}{\overset{\|}{C}}OR^7$$

steht, Y ein Schwefelatom darstellt, $a = 1$, $b = 1$, $c = 2$, $d = 1$ und $q = 1$ gelten.

9. Zusammensetzung nach einem der Ansprüche 1 bis 6, ferner dadurch gekennzeichnet, daß in Formel (VIII) R einen Methylrest darstellt, $R^1$ einen Methylrest bedeutet, X gleich —$SR^2$ ist, worin $R^2$ für

$$-R^4\overset{O}{\overset{\|}{C}}OR^7$$

steht, $X^1$ gleich —$SR^2$ ist, worin $R^2$ den Rest

$$-R^4\overset{O}{\overset{\|}{C}}OR^7$$

darstellt, Y für —S— steht, $W = 1$, $x = 0$, $y = 1$ und $z = 1$ gelten.

10. Zusammensetzung nach einem der voranstehenden Ansprüche, weiter dadurch gekennzeichnet, daß das Gewichtsverhältnis von Organozinnverbindung oder dem Gemisch von Organozinnverbindungen (A) zur organischen Verbindung oder zum Gemisch organischer Verbindungen (B) 400:1 bis 1:99 beträgt.

11. Zusammensetzung nach Anspruch 10, weiter dadurch gekennzeichnet, daß das Gewichtsverhältnis 400:1 bis 1:100 beträgt.

12. Zusammensetzung nach Anspruch 11, dadurch gekennzeichnet, daß das Gewichtsverhältnis 400:1 bis 1:20 beträgt.

13. Zusammensetzung nach einem der voranstehenden Ansprüche, weiter dadurch gekennzeichnet, daß das Gewichtsverhältnis von Organozinnverbindung oder dem Gemisch von Organozinnverbindungen (A) zu Organozinnmercaptid oder dem Gemisch von Organozinnmercaptiden (C) 99:1 bis 1:99 beträgt.

14. Polymerzusammensetzung, enthaltend ein halogenhaltiges organisches Polymer, welches normalerweise der durch Hitze induzierten Zersetzung zugänglich ist, und die dadurch gekennzeichnet ist, daß sie eine stabilisierende Menge einer Zusammensetzung nach einem der Ansprüche 1 bis 13 enthält.

15. Formteil, wie ein Rohr, umfassend ein halogenhaltiges organisches Polymer, welches normalerweise einer durch Hitze erzeugten Zersetzung zugänglich ist und dadurch gekennzeichnet ist, daß es eine stabilisierende Menge einer Zusammensetzung nach einem der Ansprüche 1 bis 13 enthält.

16. Verfahren zur Herstellung einer stabilisierenden Zusammensetzung für ein halogenhaltiges organisches Polymer, dadurch gekennzeichnet, daß

(A) eine organische Zinnverbindung oder ein Gemisch organischer Zinnverbindungen der allgemeinen Formeln

(I) 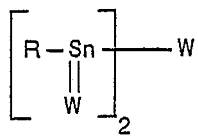

(II) 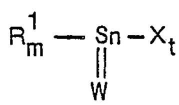 und

(IIa) 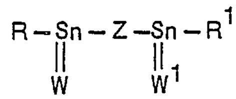

worin

W und $W^1$ gleich oder unterschiedlich sind und Sauerstoff oder Schwefel darstellen, X ausgewählt ist unter

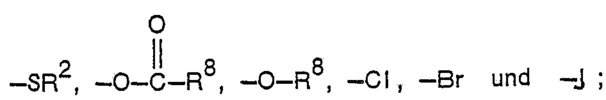

Z ausgewählt ist unter

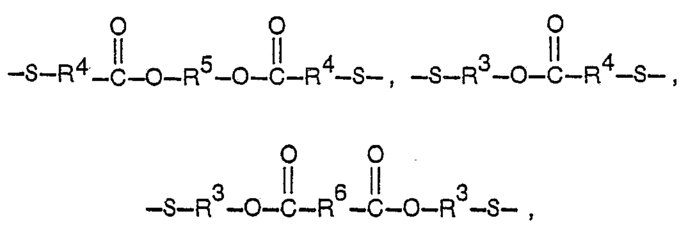

R und $R^1$ gleich oder unterschiedlich sind und unter Alkyl, Aryl, Alkenyl, Aralkyl, Alkaryl, Cycloalkyl, Cycloalkenyl,

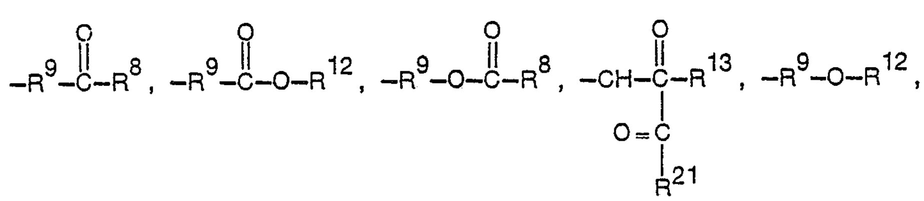

und $-R^9-CN$ ausgewählt sind,

$R^2$ für Alkyl, Alkenyl, Aryl, Aralkyl, Cycloalkyl, Cycloalkenyl,

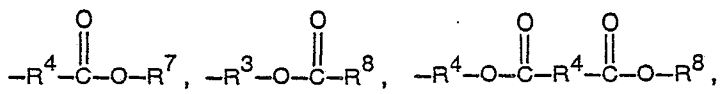

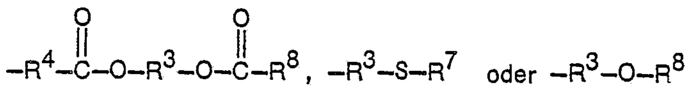 steht,

$R^3$ einen Alkylenrest mit mindestens 2 Kohlenstoffatomen, einen Arylenrest, einen Alkenylenrest mit mindestens 2 Kohlenstoffatomen, einen Cycloalkylenrest oder einen Cycloalkenylenrest darstellt,

$R^4$ einen Alkylen-, Arylen-, Alkenylenrest mit mindestens 2 Kohlenstoffatomen, einen Cycloalkylen- oder Cycloalkenylenrest bedeutet,

$R^5$ gleich $R^3$ ist,

$R^6$ eine Kohlenstoff-Kohlenstoff-Einfachbindung bedeutet oder gleich $R^4$ ist,

$R^7$ für —H oder $R^8$ steht,

$R^8$ einen Alkyl-, Alkenyl-, Aryl-, Aralkyl-, Alkaryl-, Cycloalkyl- oder Cycloalkenylrest darstellt,

$R^9$ einen $C_1$- bis $C_4$-Alkylenrest bedeutet,

$R^{12}$ ein H-Atom oder einen monovalenten $C_1$- bis $C_{20}$-Kohlenwasserstoffrest darstellt,

$R^{13}$ und $R^{21}$ gleich oder unterschiedlich sind und jeweils einen $C_1$- bis $C_{20}$-Alkylrest oder $C_1$- bis $C_{20}$-Alkoxyrest bedeuten, und

m gleich 1 oder 2 ist und t = 0 oder 1 gilt, mit der Maßgabe, daß m + t = 2 ist, und

(B) eine organische Verbindung oder ein Gemisch organischer Verbindungen, ausgewählt unter den Verbindungen der folgenden allgemeinen Formeln

(III) 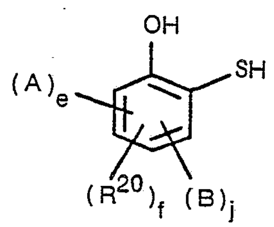 ,

(IV) 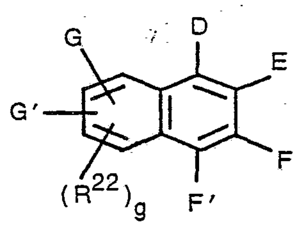 , oder

(V) 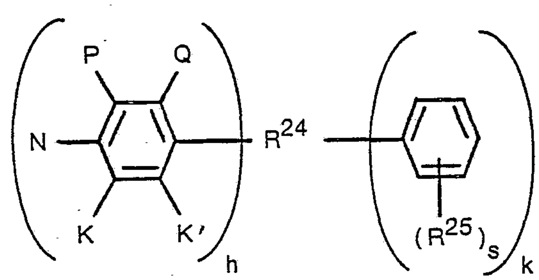

worin

A gleich —H, —OH oder —SH ist,

B gleich —H, —OH oder —SH ist,

D gleich —H, —SH, —OH oder $R^{26}$ ist,

E gleich —H, —OH, —SH oder $R^{26}$ ist,

F gleich —H, —SH, —OH oder $R^{26}$ ist,

F′ gleich —H, —OH, —SH oder $R^{26}$ ist,

G gleich —H, —OH oder —SH ist,
G' gleich —H, —SH, oder —OH ist,
K gleich —H, —SH, —OH oder $R^{23}$ ist,
K' gleich —H, —OH, —SH oder $R^{23}$ ist,
N gleich —H, —SH, —OH oder $R^{23}$ ist,
P gleich —H, —SH, —OH oder $R^{23}$ ist,
Q gleich —H, —SH, —OH oder $R^{23}$ ist,
$R^{20}$ gleich —H, Alkyl, Aryl, Alkenyl, Alkaryl, Cycloalkyl, Alkoxy oder Halogen ist,
$R^{26}$ gleich Alkyl, Alkenyl oder Halogen ist,
$R^{22}$ gleich Alkyl, Alkenyl oder Halogen ist,
$R^{23}$ gleich Alkyl, Alkenyl oder Halogen ist,
$R^{24}$ gleich Alkylen oder Alkenylen ist,
$R^{25}$ gleich Alkyl, Alkenyl, Halogen, —SH oder —OH ist,
e für 0, 1 oder 2 steht,
j für 0, 1 oder 2 steht,
f für 0, 1, 2 oder 3 steht,
s für 0, 1, 2 oder 3 steht,
g für 0, 1, 2 oder 3 steht,
h für 1, 2, 3 oder 4 steht,
k für 0, 1, 2 oder 3 steht
h + k gleich 2, 3 oder 4 ist,
e + j + f gleich 0, 1, 2, 3 oder 4 ist,

mit der Maßgabe, daß 1) in Formel (IV) zwei der Reste D, E, F und F' eine OH-Gruppe und eine SH-Gruppe, die direkt an benachbarte Ring-Kohlenstoffatome gebunden sind, sein müssen, und

2) in Formel (V) zwei der Reste K, K', N, P und Q eine OH-Gruppe und eine SH-Gruppe, die direkt an benachbarte Ring-Kohlenstoffatome gebunden sind, sein müssen,

mit oder ohne

(C) einem Organzozinnmercaptid oder einem Gemisch von Organozinnmercaptiden, ausgewählt unter Verbindungen oder folgenden Formeln

(VI) 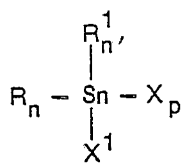

(VII) 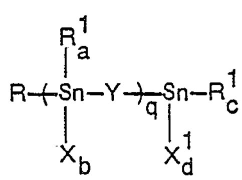 und

(VIII) 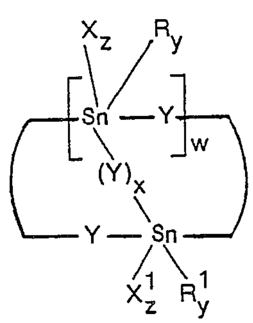

worin X die vorstehend beschriebene Bedeutung hat und X und X' gleich oder unterschiedlich sind und unter —Cl, —Br, —J, $—SR^2$,

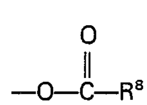

und $-O-R^8$ ausgewählt sind, mit der Maßgabe, daß in Formel (VIII), sofern z = 1 gilt und in den Formeln (VI) und (VII) mindestens ein X oder $X^1$ gleich $-SR^2$ ist, Y gleich

$$-(S)_v-,\quad -W-R^3-W^1-,\quad -S-R^4-\overset{\overset{O}{\|}}{C}-O,\quad S-R^4-\overset{\overset{O}{\|}}{C}-O-R^5-O-\overset{\overset{O}{\|}}{C}-R^4-S-,$$

$$-S-R^3-O-\overset{\overset{O}{\|}}{C}-R^4-S-,\quad -S-R^3-O-\overset{\overset{O}{\|}}{C}-R^6-\overset{\overset{O}{\|}}{C}-O-R^3-S-,\quad -O-\overset{\overset{O}{\|}}{C}-R^6-\overset{\overset{O}{\|}}{C}-O-,$$

$$-O-\overset{\overset{O}{\|}}{C}-R^6-\overset{\overset{O}{\|}}{C}-O-R^5-O-\overset{\overset{O}{\|}}{C}-R^6-\overset{\overset{O}{\|}}{C}-O,\ \text{oder}\ -S-\underset{\underset{R^{27}}{|}}{CH}-(\underset{\underset{R^{27}}{|}}{CH})_i-O-\overset{\overset{O}{\|}}{C}-(\underset{\underset{R^{27}}{|}}{CH})_i-\ \text{ist},$$

R, $R^1$, $R^2$, $R^3$, $R^4$, $R^5$, $R^6$, $R^8$, W und $W^1$ der voranstehenden Definition entsprechen, $R^{27}$ für

$$-\overset{\overset{O}{\|}}{C}-O-R^{16}$$

$$-O-\overset{\overset{O}{\|}}{C}-R^{16}$$

$-OH$, $-SH$, Aryl, $C_1$- bis $C_{18}$-Alkyl oder $-H$ steht,

$R^{16}$ gleich $-H$ oder $R^8$ ist,

i = 0 oder eine ganze Zahl von 1 bis einschließlich 6 ist,

n = 0, 1 oder 2 ist, n' = 0, 1 oder 2 ist und p = 1 oder 2 ist mit der Maßgabe, daß n + n' = 1 oder 2 ist und n + n' + p = 3 ist

a = 0, 1 oder 2 ist, b = 0, 1 oder 2 ist, q = 1 bis 5 ist, c = 1, 2 oder 3 ist und d = 0, 1 oder 2 ist, mit der Maßgabe, daß a + b = 2 und c + d = 3 gilt,

v eine ganze Zahl von 1 bis einschließlich 8 darstellt, und

w = 0, 1 oder 2 ist, x = 0 oder 1 ist, y = 1 oder 2 ist, z = 0 oder 1 ist, mit der Maßgabe, daß sofern x = 0 gilt, y + z = 2 ist, wenn x = 1 ist, y = 1, z = 0 und w = 1 gilt, wenn w = 2 gilt, x = 0 ist und wenn w = 0 gilt, y + z = 2, x = 0 und Y gleich $-W-R^3-W^1$ oder

$$-S-R^4-\overset{\overset{O}{\|}}{C}-O\ \text{ist}$$

vermischt werden.

17. Verfahren nach Anspruch 16, weiter dadurch gekennzeichnet, daß in Formel (I) R einen Methyl, Butyl oder Octylrest bedeutet und W ein Schwefelatom darstellt.

18. Verfahren nach Anspruch 16, weiter dadurch gekennzeichnet, daß in Formel (II) $R^1$ einen Methyl oder Butylrest darstellt, W ein Schwefelatom bedeutet, X für $-SR^2$ steht, worin $R^2$ den Rest

$$-R^4\overset{\overset{O}{\|}}{C}OR^7$$

darstellt, m = 1 und t = 1 gilt.

19. Verfahren nach Anspruch 16, weiter dadurch gekennzeichnet, daß in Formel (IIa) R und $R^1$ für Methyl, Butyl, Octyl oder

$$-R^9-\overset{\overset{O}{\|}}{C}-O-R^{12}$$

stehen, W und $W^1$ jeweils ein Sauerstoff- oder Schwefelatom bedeuten, und Z für

$$-S-R^3-O-\overset{\overset{\displaystyle O}{\|}}{C}-R \qquad -\overset{\overset{\displaystyle O}{\|}}{C}-O-R^3-S \qquad -S-R^3-O-\overset{\overset{\displaystyle O}{\|}}{C}-R^4-S-$$

$$-S-R^4-\overset{\overset{\displaystyle O}{\|}}{C}-O-R^5 \quad \text{oder} \quad -O-\overset{\overset{\displaystyle O}{\|}}{C}-R^4-S-$$

steht.

20. Verfahren nach einem der Ansprüche 16 bis 18, weiter dadurch gekennzeichnet, daß in Formel (III) A gleich nichts ist, B gleich nichts ist, $R^{20}$ einen Alkylrest darstellt, $e = 0$, $f = 1$ und $j = 0$ gelten.

21. Verfahren nach einem der Ansprüch 16 bis 19, weiter dadurch gekennzeichnet, daß die organische Verbindung (B) o-Hydroxythiophenol ist.

22. Verfahren nach einem der Ansprüch 16 bis 21, weiter dadurch gekennzeichnet, daß in Formel (VI) R einen Methyl- oder Butylrest darstellt, $R^1$ einen Methyl- oder Butylrest bedeutet, X gleich $-SR^2$ ist, worin $R^2$ für

$$-R^4\overset{\overset{\displaystyle O}{\|}}{C}OR^7$$

steht, $X^1$ den Rest $-SR^2$ bedeutet, worin $R^2$ für

$$-R^4\overset{\overset{\displaystyle O}{\|}}{C}OR^7$$

steht, $n = 1$, $n' = 1$ und $p = 1$ sind.

23. Verfahren nach einem der Ansprüche 16 bis 21, weiter dadurch gekennzeichnet, daß in Formel (VII) R einen Methylrest darstellt, X für $-SR^2$ steht, worin $R^2$ den Rest

$$-R^4\overset{\overset{\displaystyle O}{\|}}{C}OR^7$$

bedeutet, $R^1$ für Methyl steht, $X^1$ den Rest $-SR^2$ darstellt, worin $R^2$ für

$$-R^4\overset{\overset{\displaystyle O}{\|}}{C}OR^7$$

steht, Y ein Schwefelatom ist, $a = 1$, $b = 1$, $c = 2$, $d = 1$ und $q = 1$ gelten.

24. Verfahren nach einem der Ansprüch 16 bis 21, weiter dadurch gekennzeichnet, daß in Formel (VIII) R einen Methylrest bedeutet, $R^1$ einen Methylrest darstellt, X für $-SR^2$ steht, worin $R^2$ den Rest

$$-R^4\overset{\overset{\displaystyle O}{\|}}{C}OR^7$$

bedeutet, $X^1$ den Rest $-SR^2$ darstellt, worin $R^2$ gleich

$$-R^4\overset{\overset{\displaystyle O}{\|}}{C}OR^7$$

ist, Y ein Schwefelatom darstellt, $W = 1$, $x = 0$, $y = 1$ und $z = 1$ gelten.

25. Verfahren nach einem der Ansprüch 16 bis 24, weiter dadurch gekennzeichnet, daß das Gewichtsverhältnis von Organozinnverbindung oder dem Gemisch von Organozinnverbindungen (A) zu der organischen Verbindung oder zu dem Gemisch organischer Verbindungen (B) 400:1 bis 1:199 beträgt.

26. Verfahren nach Anspruch 25, weiter dadurch gekennzeichnet, daß das Gewichtsverhältnis der Organozinnverbindung oder des Gemisches von Organozinnverbindungen (A) zur organischen Verbindung oder dem Gemisch organischer Verbindungen (B) 400:1 bis 1:100 beträgt.

27. Verfahren nach Anspruch 26, dadurch gekennzeichnet, daß das Gewichtsverhältnis 400:1 bis 1:20 beträgt.

28. Verfahren nach einem der Ansprüche 16 bis 27, weiter dadurch gekennzeichnet, daß das Gewichtsverhältnis der Organozinnverbindung oder des Gemisches von Organozinnverbindungen (A) zum Organozinnmercaptid oder dem Gemisch von Organozinnmercaptiden (C) 99:1 bis 1:99 beträgt.

29. Verfahren zur Stabilisierung eines halogenhaltigen organischen Polymers, welches normalerweise einer durch Hitze induzierten Zersetzung unterliegt, dadurch gekennzeichnet, daß dem Polymer eine stabilisierende Menge einer Zusammensetzung, die nach einem Verfahren gemäß einem der Ansprüche 16 bis 23 hergestellt wurde, zugegeben wird.

30. Verfahren zur Formung eines Formgegenstandes, wobei eine stabilisierte Polymer-Zusammensetzung, die nach einem Verfahren gemäß Anspruch 29 hergestellt wurde, geformt wird.

**Patentansprüche für den Vertragsstaat: AT**

1. Verfahren zur Herstellung einer stabilisierenden Zusammensetzung für ein halogenhaltiges organisches Polymer, dadurch gekennzeichnet, daß

(A) eine organische Zinnverbindung oder ein Gemisch organischer Zinnverbindungen der allgemeinen Formeln

(I) 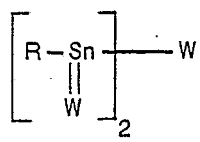

(II) 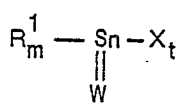 und

(IIa) 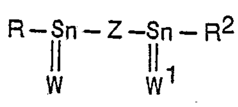

worin

W und $W^1$ gleich oder unterschiedlich sind und Sauerstoff oder Schwefel darstellen,

X ausgewählt ist unter

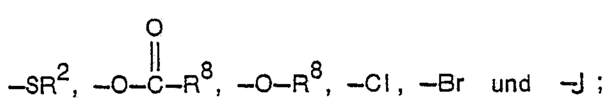

Z ausgewählt ist unter

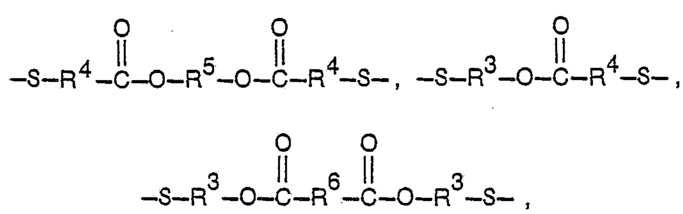

R und $R^1$ gleich oder unterschiedlich sind und unter Alkyl, Aryl, Alkenyl, Aralkyl, Alkaryl, Cycloalkyl, Cycloalkenyl,

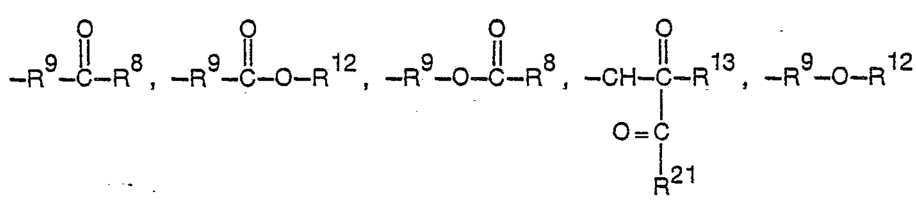

und $-R^9-CN$ ausgewählt sind,

$R^2$ für Alkyl, Alkenyl, Aryl, Aralkyl, Cycloalkyl, Cycloalkenyl,

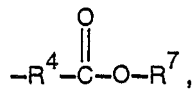, 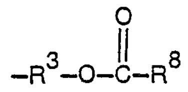, 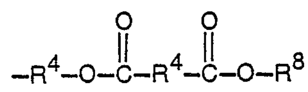,

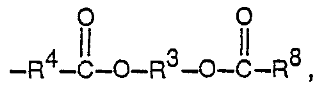, $-R^3-S-R^7$ oder $-R^3-O-R^8$ steht,

$R^3$ einen Alkylenrest mit mindestens 2 Kohlenstoffatomen, einen Arylenrest, einen Alkenylenrest mit mindestens 2 Kohlenstoffatomen, einen Cycloalkylenrest oder einen Cycloalkenylenrest darstellt,

$R^4$ einen Alkylen-, Arylen-, Alkenylenrest mit mindestens 2 Kohlenstoffatomen, einen Cycloalkylen- oder Cycloalkenylenrest bedeutet,

$R^5$ gleich $R^3$ ist,

$R^6$ eine Kohlenstoff-Kohlenstoff-Einfachbindung bedeutet oder gleich $R^4$ ist,

$R^7$ für —H oder $R^8$ steht,

$R^8$ einen Alkyl-, Alkenyl-, Aryl-, Aralkyl-, Alkaryl-, Cycloalkyl- oder Cycloalkenylrest darstellt,

$R^9$ einen $C_1$- bis $C_4$-Alkylenrest bedeutet,

$R^{12}$ ein H-Atom oder einen monovalenten $C_1$- bis $C_{20}$-Kohlenwasserstoffrest darstellt,

$R^{13}$ und $R^{21}$ gleich oder unterschiedlich sind und jeweils einen $C_1$- bis $C_{20}$-Alkylrest oder $C_1$- bis $C_{20}$-Alkoxyrest bedeuten, und

m gleich 1 oder 2 ist und t = 0 oder 1 gilt, mit der Maßgabe, daß m + t = 2 ist, und

(B) eine organische Verbindung oder ein Gemisch organischer Verbindungen, ausgewählt unter den Verbindungen der folgenden allgemeinen Formeln

(III) 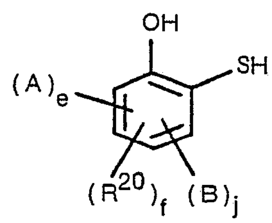 ,

(IV) 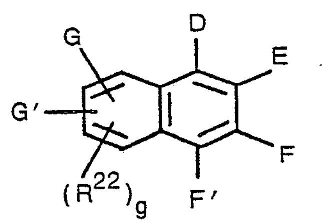 , oder

(V) 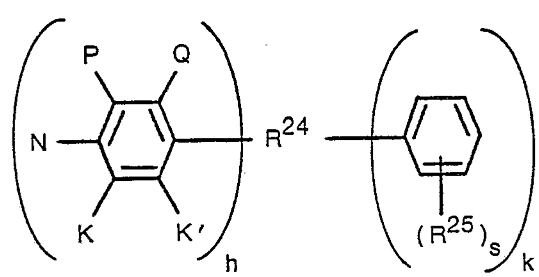

worin

A gleich —H, —OH oder —SH ist,

B gleich —H, —OH oder —SH ist,

D gleich —H, —SH, —OH oder $R^{26}$ ist,

E gleich —H, —OH, —SH oder $R^{26}$ ist,

F gleich —H, —SH, —OH oder $R^{26}$ ist,

F' gleich —H, —OH, —SH oder $R^{26}$ ist,
G gleich —H, —OH oder —SH ist,
G' gleich —H, —SH, oder —OH ist,
K gleich —H, —SH, —OH oder $R^{23}$ ist,
K' gleich —H, —OH, —SH oder $R^{23}$ ist,
N gleich —H, —SH, —OH oder $R^{23}$ ist,
P gleich —H, —SH, —OH oder $R^{23}$ ist,
Q gleich —H, —SH, —OH oder $R^{23}$ ist,
$R^{20}$ gleich —H, Alkyl, Aryl, Alkenyl, Alkaryl, Cycloalkyl, Alkoxy oder Halogen ist,
$R^{26}$ gleich Alkyl, Alkenyl oder Halogen ist,
$R^{22}$ gleich Alkyl, Alkenyl oder Halogen ist,
$R^{23}$ gleich Alkyl, Alkenyl oder Halogen ist,
$R^{24}$ gleich Alkylen oder Alkenylen ist,
$R^{25}$ gleich Alkyl, Alkenyl, Halogen, —SH oder —OH ist,
e für 0, 1 oder 2 steht,
j für 0, 1 oder 2 steht,
f für 0, 1, 2 oder 3 steht,
s für 0, 1, 2 oder 3 steht,
g für 0, 1, 2 oder 3 steht,
h für 1, 2, 3 oder 4 steht,
k für 0, 1, 2 oder 3 steht
h + k gleich 2, 3 oder 4 ist,
e + j + f gleich 0, 1, 2, 3 oder 4 ist,

mit der Maßgabe, daß 1) in Formel (IV) zwei der Reste D, E, F und F' eine OH-Gruppe und eine SH-Gruppe, die direkt an benachbarte Ring-Kohlenstoffatome gebunden sind, sein müssen, und

2) in Formel (V) zwei der Reste K, K', N, P und Q eine OH-Gruppe und eine SH-Gruppe, die direkt an benachbarte Ring-Kohlenstoffatome gebunden sind, sein müssen,

mit oder ohne

(C) einem Organozinnmercaptid oder einem Gemisch von Organozinnmercaptiden, ausgewählt unter Verbindungen der folgenden Formeln

(VI) 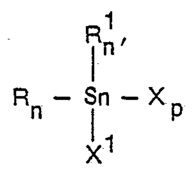

(VII) 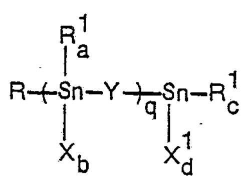 und

(VIII) 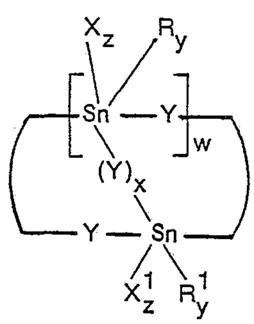

worin X die vorstehend beschriebene Bedeutung hat und X und $X^1$ gleich oder unterschiedlich sind und unter —Cl, —Br, —J, —$SR^2$,

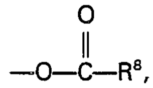

und $-O-R^8$ ausgewählt sind, mit der Maßgabe, daß in Formel (VIII), sofern z = 1 gilt und in den Formeln (VI) und (VII) mindestens ein X oder $X^1$ gleich $-SR^2$ ist, Y gleich

$-(S)_v-$, $-W-R^3-W^1-$, 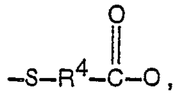, 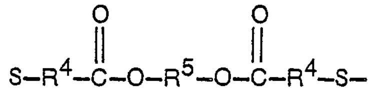,

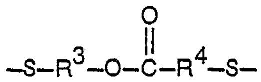, 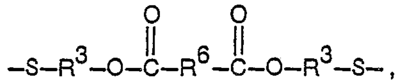, 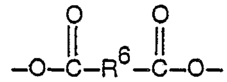,

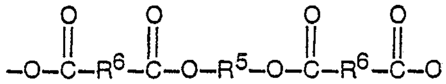 oder 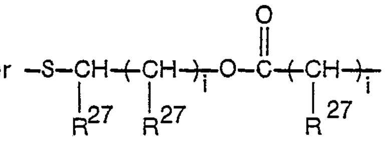 ist,

R, $R^1$, $R^2$, $R^3$, $R^4$, $R^5$, $R^6$, $R^8$, W und $W^1$ der voranstehenden Definition entsprechen, $R^{27}$ für

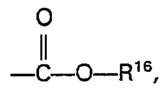

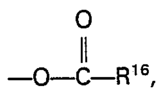

—OH, —SH, Aryl, $C_1$- bis $C_{18}$-Alkyl oder —H steht,

$R^{16}$ gleich —H oder $R^8$ ist,

i = 0 oder eine ganze Zahl von 1 bis einschließlich 6 ist,

n = 0, 1 oder 2 ist, n' = 0, 1 oder 2 ist und p = 1 oder 2 ist mit der Maßgabe, daß n + n' = 1 oder 2 ist und n + n' + p = 3 ist

a = 0, 1 oder 2 ist, b = 0, 1 oder 2 ist, q = 1 bis 5 ist, c = 1, 2 oder 3 ist und d = 0, 1 oder 2 ist, mit der Maßgabe, daß a + b = 2 und c + d = 3 gilt,

v eine ganze Zahl von 1 bis einschließlich 8 darstellt, und

w = 0, 1 oder 2 ist, x = 0, oder 1 ist, y = 1 oder 2 ist, z = 0 oder 1 ist, mit der Maßgabe, daß sofern x = 0 gilt, y + z = 2 ist, wenn x = 1 ist, y = 1, z = 0 und w = 1 gilt, wenn w = 2 gilt, x = 0 ist und wenn w = 0 gilt, y + z = 2, x = 0 und Y gleich $-W-R^3-W^1$ oder

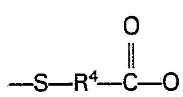 ist,

vermischt werden.

2. Verfahren nach Anspruch 1, weiter dadurch gekennzeichnet, daß in Formel (I) R einen Methyl, Butyl oder Octylrest bedeutet und W ein Schwefelatom darstellt.

3. Verfahren nach Anspruch 1, weiter dadurch gekennzeichnet, daß in Formel (II) $R^1$ einen Methyl- oder Butylrest darstellt, W ein Schwefelatom bedeutet, X für $-SR^2$ steht, worin $R^2$ den Rest

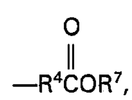

darstellt, m = 1 und t = 1 gilt.

4. Verfahren nach Anspruch 1, weiter dadurch gekennzeichnet, daß in Formel (IIa) R und $R^1$ für Methyl, Butyl, Octyl oder

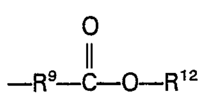

stehen, W und $W^1$ jeweils ein Sauerstoff- oder Schwefelatom bedeuten, und Z für

$$-S-R^3-O-\overset{O}{\overset{\|}{C}}-R, \quad -\overset{O}{\overset{\|}{C}}-O-R^3-S, \quad -S-R^3-O-\overset{O}{\overset{\|}{C}}-R^4-S-,$$

$$-S-R^4-\overset{O}{\overset{\|}{C}}-O-R^5 \quad \text{oder} \quad -O-\overset{O}{\overset{\|}{C}}-R^4-S- \text{ steht.}$$

5. Verfahren nach einem der voranstehenden Ansprüche, weiter dadurch gekennzeichnet, daß in Formel (III) A nichts ist, B nichts ist, $R^{20}$ einen Alkylrest darstellt, e = 0, f = 1 und j = 0 gelten.

6. Verfahren nach einem der Ansprüche 1 bis 4, weiter dadurch gekennzeichnet, daß die organische Verbindung (B) o-Hydroxythiophenol ist.

7. Verfahren nach einem der voranstehenden Ansprüche, weiter dadurch gekennzeichnet, daß in Formel (VI) R einen Methyl- oder Butylrest darstellt, $R^1$ einen Methyl- oder Butylrest bedeutet, X gleich $-SR^2$ ist, worin $R^2$ für

$$-R^4\overset{O}{\overset{\|}{C}}OR^7,$$

steht, $X^1$ den Rest $-SR^2$ bedeutet, worin $R^2$ für

$$-R^4\overset{O}{\overset{\|}{C}}OR^7,$$

steht, n = 1, n' = 1 und p = 1 sind.

8. Verfahren nach einem der Ansprüche 1 bis 6, weiter dadurch gekennzeichnet, daß in Formel (VII) R einen Methylrest darstellt, X für $-SR^2$ steht, worin $R^2$ den Rest

$$-R^4\overset{O}{\overset{\|}{C}}OR^7$$

bedeutet, $R^1$ für Methyl steht, $X^1$ den Rest $-SR^2$ darstellt, worin $R^2$ für

$$-R^4\overset{O}{\overset{\|}{C}}OR^7$$

steht, Y ein Schwefelatom ist, a = 1, b = 1, c = 2, d = 1 und q = 1 gelten.

9. Verfahren nach einem der Ansprüche 1 bis 6, weiter dadurch gekennzeichnet, daß in Formel (VIII) R einen Methylrest bedeutet, $R^1$ einen Methylrest darstellt, X für $-SR^2$ steht, worin $R^2$ den Rest

$$-R^4\overset{O}{\overset{\|}{C}}OR^7$$

bedeutet, $X^1$ den Rest $-SR^2$ darstellt, worin $R^2$ gleich

$$-R^4\overset{O}{\overset{\|}{C}}OR^7$$

ist, Y ein Schwefelatom darstellt, W = 1, x = 0, y = 1 und z = 1 gelten.

10. Verfahren nach einem der voranstehenden Ansprüche, weiter dadurch gekennzeichnet, daß das Gewichtsverhältnis von Organozinnverbindung oder dem Gemisch von Organozinnverbindungen (A) zu der organischen Verbindung oder zu dem Gemisch organischer Verbindungen (B) 400:1 bis 1:199 beträgt.

11. Verfahren nach Anspruch 10, weiter dadurch gekennzeichnet, daß das Gewicktsverhältnis der Organozinnverbindung oder des Gemisches von Organozinnverbindung (A) zur organischen Verbindung oder dem Gemisch von organischen Verbindungen (B) 400:1 bis 1:100 beträgt.

12. Verfahren nach Anspruch 11, dadurch gekennzeichnet, daß das Gewichtsverhältnis 400:1 bis 1:20 beträgt.

13. Verfahren nach einem der voranstehenden Ansprüche, weiter dadurch gekennzeichnet, daß das

Gewichtsverhältnis von Organozinnverbindung oder des Gemisches von Organozinnverbindungen (A) zu Organozinnmercaptid oder dem Gemisch von Organozinnmercaptiden (C) 99:1 bis 1:99 beträgt.

14. Verfahren zur Stabilisierung eines halogenhaltigen organischen Polymers, welches normalerweise einer durch Hitze induzierten Zersetzung zugänglich ist, dadurch gekennzeichnet, daß dem Polymer eine stabilisierende Menge einer Zusammensetzung nach einem der Ansprüche 1 bis 13 zugesetzt wird.

15. Verfahren zur Formung eines Formgegenstandes, wobei eine stabilisierte Polymer-Zusammensetzung, die nach einem Verfahren gemäß Anspruch 14 hergestellt wurde, geformt wird.

16. Formteil, wie ein Rohr, umfassend ein halogenhaltiges organisches Polymer, welches normalerweise einer durch Hitze erzeugten Zersetzung zugänglich ist und dadurch gekennzeichnet ist, daß es eine stabilisierende Menge einer Zusammensetzung nach einem der Ansprüche 1 bis 13 enthält.

**Revendications pour les Etats contractants: BE CH DE FR GB IT LI NL SE**

1. Une composition pour stabiliser un polymère organique contenant un halogène contre les effets de dégradation de la chaleur, caractérisée en ce qu'elle comprend

(A) un composé organique ou un mélange de composés organiques de l'étain choisis parmi ceux qui répondent aux formules générales:

(I) 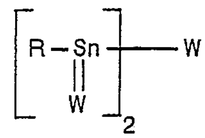

(II) 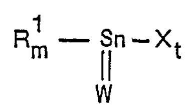 et

(IIa) 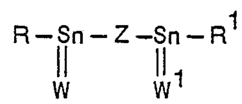

dans lesquelles

W et W¹, identiques ou différents, représentent l'oxygène ou le soufre;

X est choisi parmi

$-SR^2$, 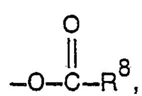, $-O-R^8$, $-Cl$, $-Br$ et $-I$ ;

Z représente

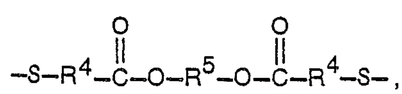, 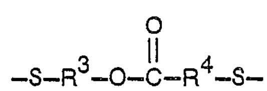,

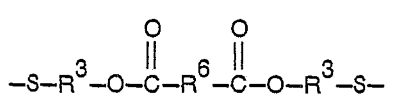 ;

R et R¹, identiques ou différents, sont choisis parmi les groupes akyle, aryle, alcényle, aralkyle, alkylaryle, cycloalkyle, cycloalcényle,

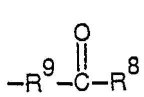, 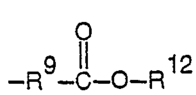, 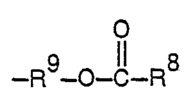, 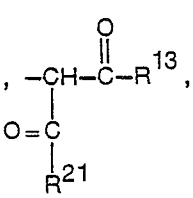, $-R^9-O-R^{12}$, et $-R^9-CN$ ;

$R^2$ représente un groupe alkyle, alcényle, aryle, aralkyle, cycloalkyle, cycloalcényle,

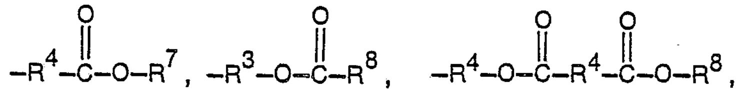

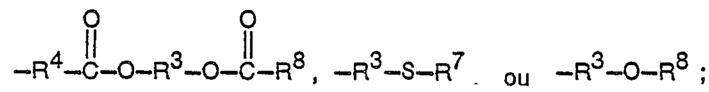

ou ;

$R^3$ représente un groupe alkylène à au moins 2 atomes de carbone, arylène, alcénylène à au moins 2 atomes de carbone, cycloalkylène ou cycloalcénylène;

$R^4$ représente un groupe alkylène, arylène, alcénylène à au moins 2 atomes de carbone, cycloalkylène, ou cycloalcénylène;

$R^5$ a la même signification que $R^3$;

$R^6$ représente une liaison simple carbone-carbone ou a la même signification que $R^4$;

$R^7$ représente —H ou a la même signification que $R^8$;

$R^8$ représente un groupe alkyle, alcényle, aryle, aralkyle, alkylaryle, cycloalkyle, ou cycloalcényle;

$R^9$ représente un groupe alkylène en $C_1$—$C_4$;

$R^{12}$ représente —H ou un radical hydrocarboné monovalent en $C_1$—$C_{20}$;

$R^{13}$ et $R^{21}$, identiques ou différents, représentent chacun un groupe alkyle en $C_1$—$C_{20}$ ou alcoxy en $C_1$—$C_{20}$; et

m = 1 ou 2 et t = 0 ou 1, avec m + t = 2,

et

(B) un composé organique ou un mélange de composés organiques choisis parmi ceux qui répondent aux formules générales suivantes:

(III) 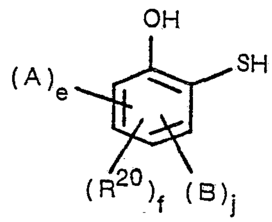 ,

(IV) 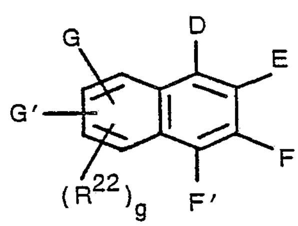 , ou

(V) 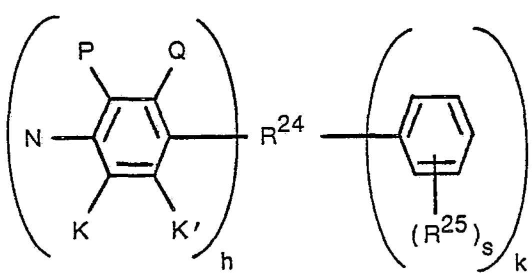 .

dans lesquelles

A représente —H, —H ou —SH,

B représente —H, —OH ou —SH,

D représente —H, —SH, —OH ou a la même signification que $R^{26}$

E représente —H, —OH, —SH ou a la même signification que $R^{26}$

F représente —H, —SH, —OH ou a la même signification que $R^{26}$
F' représente —H, —OH, —SH ou a la même signification que $R^{26}$
G représente —H, —OH ou —SH
G' représente —H, —SH ou —OH
K représente —H, —SH, —OH ou a la même signification que $R^{23}$
K' représente —H, —OH, —SH ou a la même signification que $R^{23}$
N représente —H, —SH, —OH ou a la même signification que $R^{23}$
P représente —H, —SH, —OH ou a la même signification que $R^{23}$
Q représente —H, —SH, —OH ou a la même signification que $R^{23}$
$R^{20}$ représente —H, un groupe alkyle, aryle, alcényle, alkylaryle, cycloalkyle, alcoxy ou un halogène,
$R^{26}$ représente un groupe alkyle, alcényle ou un halogène
$R^{22}$ représente un groupe alkyle, alcényle ou un halogène
$R^{23}$ représente un groupe alkyle, alcényle ou un halogène
$R^{24}$ représente un groupe alkylène ou alcénylène
$R^{25}$ représente un groupe alkyle, alcényle, un halogène, —SH ou —OH
e est égal à 0, 1 ou 2
j est égal à 0, 1 ou 2
f est égal à 0, 1, 2 ou 3
s est égal à 0, 1, 2 ou 3
g est égal à 0, 1, 2 ou 3
h est égal à 1, 2, 3 ou 4
k est égal à 0, 1, 2 ou 3
$h + k = 2, 3$ ou 4
$e + j + f = 0, 1, 2, 3$ ou 4

étant spécifié que 1) dans la formule (IV), deux des groupes D, E, F et F' doivent consister en un groupe OH et un groupe SH reliés directement à des atomes de carbone cycliques voisins, et 2) dans la formule (V), deux des groupes K, K', N, P et Q doivent consister en un groupe OH et un groupe SH reliés directement à des atomes de carbone cycliques voisins,

avec ou sans,

(C) un mercaptide d'organo-étain ou un mélange de mercaptides d'organo-étain choisis parmi les composés répondant aux formules générales:

(VI) 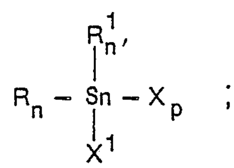 ;

(VII) 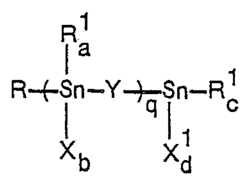 et

(VIII) 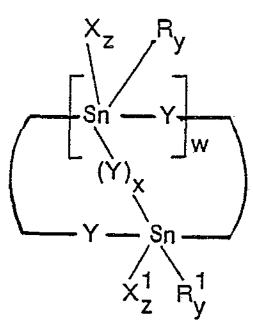

dans lesquelles

X a les significations indiquées ci-dessus et X et $X^1$, identiques ou différents, sont choisis parmi —Cl, —Br, —I, —$SR^2$,

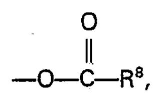,

et $—O—R^8$, étant spécifié que dans la formule (VIII), lorsque z = 1, et dans les formules (VI) et (VII), au moins un des symboles X ou $X^1$ représente $—SR^2$;

Y représente

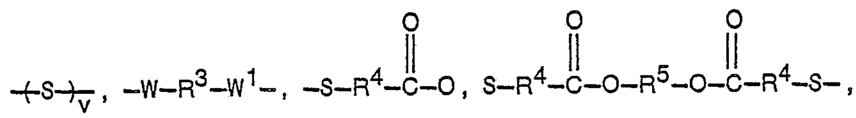

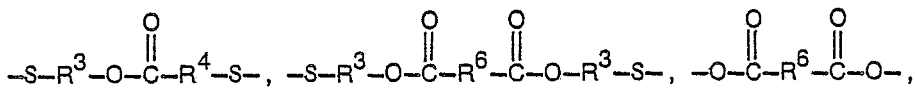

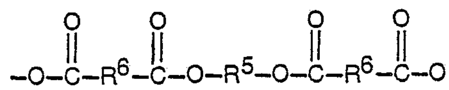

ou

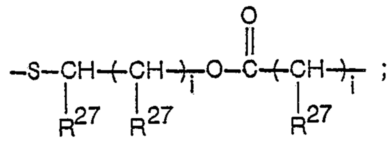

R, $R^1$, $R^2$, $R^3$, $R^4$, $R^5$, $R^6$, $R^8$, W et $W^1$ ont les significations indiquées ci-dessus;

$R^{27}$ représente

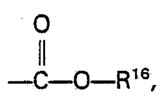

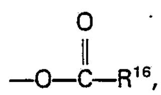

—OH, —SH, un groupe aryle, alkyle en $C_1—C_{18}$ ou —H;

$R^{16}$ représente —H ou a la même signification que $R^8$;

i = 0 ou un nombre de 1 à 6 inclus;

n = 0, 1 ou 2, n′ = 0, 1 ou 2 et p = 1 ou 2, avec n + n′ = 1 ou 2 et n + n′ + p = 3,

a = 0, 1 ou 2, b = 0, 1 ou 2, q = 1 à 5, c = 1, 2 ou 3 et d = 0, 1 ou 2 avec a + b = 2 et c + d = 3;

v est un nombre de 1 à 8 inclus; et

w = 0, 1 ou 2, x = 0 ou 1, y = 1 ou 2, z = 0 ou 1, étant spécifié que lorsque x = 0, y + z = 2, lorsque x = 1, y = 1, z = 0 et w = 1, lorsque w = 2, x = 0 et lorsque w = 0, y + z = 2, x = 0 et Y représente $—W—R^3—W^1$ ou

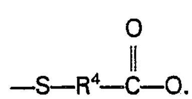

2. La composition selon la revendication 1, caractérisée en outre en ce que, dans la formule (I), R représente un groupe méthyle, butyle, ou octyle et W représente le soufre.

3. La composition selon la revendication 1, caractérisée en outre en ce que, dans la formule (II), $R^1$ représente un groupe méthyle ou butyle, W représente le soufre, X représente $—SR^2$ avec

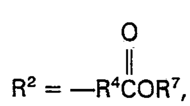

m = 1 et t = 1.

4. La composition selon la revendication 1, caractérisée en outre en ce que, dans la formule (IIa), R et $R^1$ représentent des groupes méthyle, butyle, octyle ou

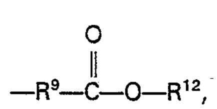

W et $W^1$ représentent l'oxygène ou le soufre; et Z représente

$$-S-R^3-O-\overset{\overset{O}{\|}}{C}-R,\quad -\overset{\overset{O}{\|}}{C}-O-R^3-S,\quad -S-R^3-O-\overset{\overset{O}{\|}}{C}-R^4-S-\quad \text{ou}\quad -S-R^4-\overset{\overset{O}{\|}}{C}-O-R^5-O-\overset{\overset{O}{\|}}{C}-R^4-S-.$$

5. La composition selon l'une quelconque des revendications qui précèdent, caractérisée en outre en ce que, dans la formule (III), A est supprimé, B est supprimé, $R^{20}$ représente un groupe alkyle, $e = 0$, $f = 1$ et $j = 0$.

6. La composition selon l'une quelconque des revendications qui précèdent, caractérisée en ce que le composé organique B est l'ortho-hydroxythiophénol.

7. La composition selon l'une quelconque des revendications qui précèdent, caractérisée en outre en ce que, dans la formule (VI), R représente un groupe méthyle ou butyle, $R^1$ représente un groupe méthyle ou butyle, X représente $-SR^2$ avec

$$R^2 = -R^4\overset{\overset{O}{\|}}{C}OR^7,$$

$X^1$ représente $-SR^2$ avec

$$R^2 = -R^4\overset{\overset{O}{\|}}{C}OR^7,$$

$n = 1$, $n' = 1$ et $p = 1$.

8. La composition selon l'une quelconque des revendications 1 à 6, caractérisée en outre en ce que, dans la formule (VII), R représente un groupe méthyle, X représente $-SR^2$ avec

$$R^2 = -R^4\overset{\overset{O}{\|}}{C}OR^7,$$

$R^1$ représente un groupe méthyle, $X^1$ représente $-SR^2$ avec

$$R^2 = -R^4\overset{\overset{O}{\|}}{C}OR^7,$$

Y représente —S—, $a = 1$, $b = 1$, $c = 2$, $d = 1$ et $q = 1$.

9. La composition selon l'une quelconque des revendications 1 à 6, caractérisée en outre en ce que, dans la formule (VIII), R représente un groupe méthyle, $R^1$ représente un groupe méthyle, X représente $-SR^2$ avec

$$R^2 = -R^4\overset{\overset{O}{\|}}{C}OR^7,$$

$X^1$ représente $-SR^2$ avec

$$R^2 = -R^4\overset{\overset{O}{\|}}{C}OR^7,$$

Y représente —S—, $W = 1$, $x = 0$, $y = 1$ et $z = 1$.

10. La composition selon l'une quelconque des revendications qui précèdent, caractérisée en outre en ce que les proportions relatives en poids entre le composé organique de l'étain ou le mélange de composés organiques de l'étain A et le composé organique ou le mélange de composés organiques B sont de 400:1 à 1:199.

11. La composition selon la revendication 10, caractérisée en outre en ce que ces proportions relatives en poids sont de 400:1 à 1:100.

12. La composition selon la revendication 11, caractérisée en ce que les proportions relatives en poids sont de 400:1 à 1:20.

13. La composition selon l'une quelconque des revendications qui précèdent, caractérisée en outre en ce que les proportions relatives en poids entre le composé organique de l'étain ou le mélange de composés organiques de l'étain A et le mercaptide d'organo-étain ou le mélange de mercaptides d'organo-étain C sont de 99:1 à 1:99.

14. Une composition polymère comprenant un polymère organique qui contient un halogène et qui est normalement sensible aux dégradations provoquées par la chaleur, et caractérisée en ce qu'elle contient une quantité stabilisante d'une composition selon l'une quelconque des revendications 1 à 13.

15. Un article manufacturé façonné tel qu'un tube comprenant un polymère organique qui contient un halogène et est normalement sensible aux dégradations provoquées par la chaleur, et caractérisé en ce qu'il contient une quantité stabilisante d'une composition selon l'une quelconque des revendications 1 à 13.

16. Un procédé pour préparer une composition stabilisante pour un polymère organique contenant un halogène, caractérisé en ce qu'il consiste à mélanger:

(A) un composé organique ou un mélange de composés organiques de l'étain choisis parmi ceux qui répondent aux formules générales:

(I) 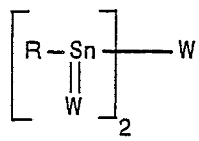

(II) 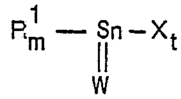 et

(IIa) 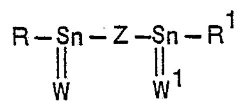

dans lesquelles

W et $W^1$, identiques ou différents, représentent l'oxygène ou le soufre;

X est choisi parmi

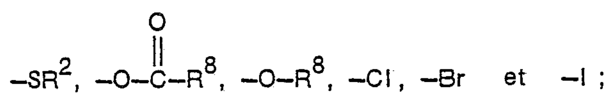

Z représente

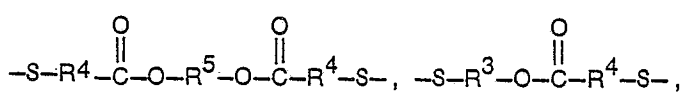

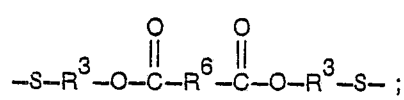

R et $R^1$, identiques ou différents, sont choisis parmi les groupes akyle, aryle, alcényle, aralkyle, alkylaryle, cycloalkyle, cycloalcényle,

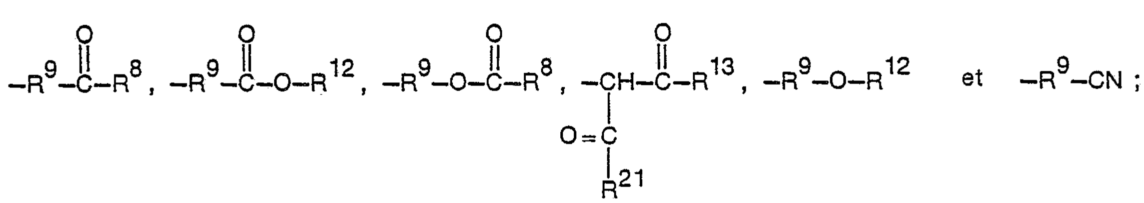

$R^2$ représente un groupe alkyle, alcényle, aryle, aralkyle, cycloalkyle, cycloalcényle,

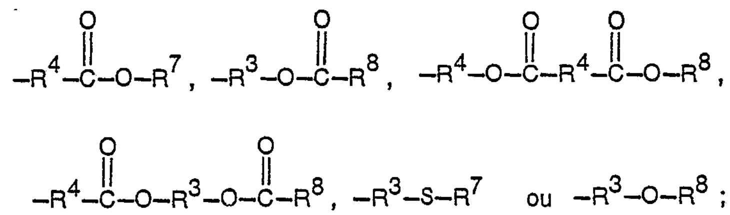

ou

$R^3$ représente un groupe alkylène à au moins 2 atomes de carbone, arylène, alcénylène à au moins 2 atomes de carbone, cycloalkylène ou cycloalcénylène;

$R^4$ représente un groupe alkylène, arylène, alcénylène à au moins 2 atomes de carbone, cycloalkylène, ou cycloalcénylène;

$R^5$ a la même signification que $R^3$;

$R^6$ représente une liaison simple carbone-carbone ou a la même signification que $R^4$;

$R^7$ représente —H ou a la même signification que $R^8$;

$R^8$ représente un groupe alkyle, alcényle, aryle, aralkyle, alkylaryle, cycloalkyle, ou cycloalcényle;

$R^9$ représente un groupe alkylène en $C_1$—$C_4$;

$R^{12}$ représente —H ou un radical hydrocarboné monovalent en $C_1$—$C_{20}$;

$R^{13}$ et $R^{21}$, identiques ou différents, représentent chacun un groupe alkyle en $C_1$—$C_{20}$ ou alcoxy en $C_1$—$C_{20}$; et

$m = 1$ ou 2 et $t = 0$ ou 1, avec $m + t = 2$,

et

(B) un composé organique ou un mélange de composés organiques choisis parmi ceux qui répondent aux formules générales suivantes:

(III) 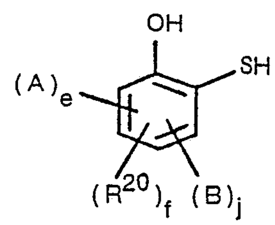 ,

(IV) 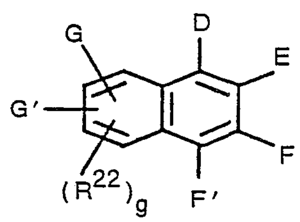 ou

(V) 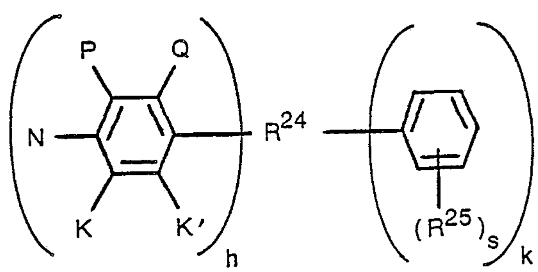

dans lesquelles

A représente —H, —H ou —SH,

B représente —H, —OH ou —SH,

D représente —H, —SH, —OH ou a la même signification que $R^{26}$

E représente —H, —OH, —SH ou a la même signification que $R^{26}$

F représente —H, —SH, —OH ou a la même signification que $R^{26}$

F' représente —H, —OH, —SH ou a la même signification que $R^{26}$
G représente —H, —OH ou —SH
G' représente —H, —SH ou —OH
K représente —H, —SH, —OH ou a la même signification que $R^{23}$
K' représente —H, —OH, —SH ou a la même signification que $R^{23}$
N représente —H, —SH, —OH ou a la même signification que $R^{23}$
P représente —H, —SH, —OH ou a la même signification que $R^{23}$
Q représente —H, —SH, —OH ou a la même signification que $R^{23}$
$R^{20}$ représente —H, un groupe alkyle, aryle, alcényle, alkylaryle, cycloalkyle, alcoxy ou un halogène,
$R^{26}$ représente un groupe alkyle, alcényle ou un halogène
$R^{22}$ représente un groupe alkyle, alcényle ou un halogène
$R^{23}$ représente un groupe alkyle, alcényle ou un halogène
$R^{24}$ représente un groupe alkylène ou alcénylène
$R^{25}$ représente un groupe alkyle, alcényle, un halogène, —SH ou —OH
e est égal à 0, 1 ou 2
j est égal à 0, 1 ou 2
f est égal à 0, 1, 2 ou 3
s est égal à 0, 1, 2 ou 3
g est égal à 0, 1, 2 ou 3
h est égal à 1, 2, 3 ou 4
k est égal à 0, 1, 2 ou 3
$h + k = 2, 3$ ou 4
$e + j + f = 0, 1, 2, 3$ ou 4

étant spécifié que 1) dans la formule (IV), deux des groupes D, E, F et F' doivent consister en un groupe OH et un groupe SH reliés directement à des atomes de carbone cycliques voisins, et 2) dans la formule (V), deux des groupes K, K', N, P et Q doivent consister en un groupe OH et un groupe SH reliés directement à des atomes de carbone cycliques voisins,

avec ou sans,

(C) un mercaptide d'organo-étain ou un mélange de mercaptides d'organo-étain choisis parmi les composés répondant aux formules générales:

(VI) 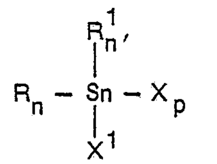 ,

(VII) 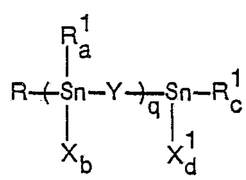 et

(VIII) 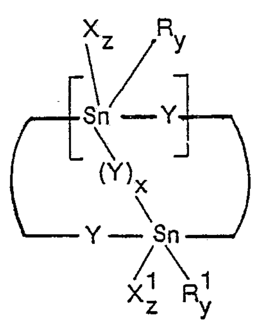

dans lesquelles

X a les significations indiquées ci-dessus et X et $X^1$, identiques ou différents, sont choisis parmi —Cl, —Br, —I, —$SR^2$,

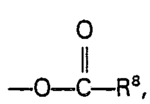

et $-O-R^8$, étant spécifié que dans la formule (VIII), lorsque $z = 1$, et dans les formules (VI) et (VII), au moins un des symboles X ou $X^1$ représente $-SR^2$;

Y représente

$$-(S)_v-,\ -W-R^3-W^1-,\ -S-R^4-\overset{O}{\overset{\|}{C}}-O,\ S-R^4-\overset{O}{\overset{\|}{C}}-O-R^5-O-\overset{O}{\overset{\|}{C}}-R^4-S-,$$

$$-S-R^3-O-\overset{O}{\overset{\|}{C}}-R^4-S-,\ -S-R^3-O-\overset{O}{\overset{\|}{C}}-R^6-\overset{O}{\overset{\|}{C}}-O-R^3-S-,\ -O-\overset{O}{\overset{\|}{C}}-R^6-\overset{O}{\overset{\|}{C}}-O-,$$

$$-O-\overset{O}{\overset{\|}{C}}-R^6-\overset{O}{\overset{\|}{C}}-O-R^5-O-\overset{O}{\overset{\|}{C}}-R^6-\overset{O}{\overset{\|}{C}}-O \quad \text{ou} \quad -S-\underset{R^{27}}{\underset{|}{CH}}-(\underset{R^{27}}{\underset{|}{CH}})_i-O-\overset{O}{\overset{\|}{C}}-(\underset{R^{27}}{\underset{|}{CH}})_i- \ ;$$

R, $R^1$, $R^2$, $R^3$, $R^4$, $R^5$, $R^6$, $R^8$, W et $W^1$ ont les significations indiquées ci-dessus;

$R^{27}$ représente

$$-\overset{O}{\overset{\|}{C}}-O-R^{16},$$

$$-O-\overset{O}{\overset{\|}{C}}-R^{16},$$

$-OH$, $-SH$, un groupe aryle, alkyle en $C_1-C_{18}$ ou $-H$;

$R^{16}$ représente $-H$ ou a la même signification que $R^8$;

$i = 0$ ou un nombre de 1 à 6 inclus;

$n = 0$, 1 ou 2, $n' = 0$, 1 ou 2 et $p = 1$ ou 2, avec $n + n' = 1$ ou 2 et $n + n' + p = 3$,

$a = 0$, 1 ou 2, $b = 0$, 1 ou 2, $q = 1$ à 5, $c = 1$, 2 ou 3 et $d = 0$, 1 ou 2 avec $a + b = 2$ et $c + d = 3$;

v est un nombre de 1 à 8 inclus; et

$w = 0$, 1 ou 2, $x = 0$ ou 1, $y = 1$ ou 2, $z = 0$ ou 1, étant spécifié que lorsque $x = 0$, $y + z = 2$, lorsque $x = 1$, $y = 1$, $z = 0$ et $w = 1$, lorsque $w = 2$, $x = 0$ et lorsque $w = 0$, $y + z = 2$, $x = 0$ et Y représente $-W-R^3-W^1$ ou

$$-S-R^4-\overset{O}{\overset{\|}{C}}-O.$$

17. Procédé selon la revendication 16, caractérisé en outre en ce que, dans la formule (I), R représente un groupe méthyle, butyle, ou octyle et W représente le soufre.

18. Le procédé selon la revendication 16, caractérisé en outre en ce que, dans la formule (II), $R^1$ représente un groupe méthyle ou butyle, W représente le soufre, X représente $-SR^2$ avec

$$R^2 = -R^4\overset{O}{\overset{\|}{C}}OR^7,$$

$m = 1$ et $t = 1$.

19. Le procédé selon la revendication 16, caractérisé en outre en ce que, dans la formule (IIa), R et $R^1$ représentent des groupes méthyle, butyle, octyle ou

$$-R^9-\overset{O}{\overset{\|}{C}}-O-R^{12},$$

W et $W^1$ représentent l'oxygène ou le soufre; et Z représente

$$-S-R^3-O-\overset{O}{\overset{\|}{C}}-R\ ,\quad -\overset{O}{\overset{\|}{C}}-O-R^3-S\ ,\quad -S-R^3-O-\overset{O}{\overset{\|}{C}}-R^4-S-\quad \text{ou}\quad -S-R^4-\overset{O}{\overset{\|}{C}}-O-R^5-O-\overset{O}{\overset{\|}{C}}-R^4-S-.$$

20. Le procédé selon l'une quelconque des revendications 16 à 18, caractérisé en outre en ce que, dans la formule (III), A est supprimé, B est supprimé, $R^{20}$ représente un groupe alkyle, $e = 0$, $f = 1$ et $j = 0$.

21. Le procédé selon l'une quelconque des revendications 16 à 19, caractérisé en outre en ce que le composé organique B est l'ortho-hydroxythiophénol.

22. Le procédé selon l'une quelconque des revendications 16 à 21, caractérisé en outre en ce que, dans la formule (VI), R représente un groupe méthyle ou butyle, $R^1$ représente un groupe méthyle ou butyle, X représente $-SR^2$ avec

$$R^2 = -R^4\overset{O}{\overset{\|}{C}}OR^7,$$

$X^1$ représente $-SR^2$ avec

$$R^2 = -R^4\overset{O}{\overset{\|}{C}}OR^7,$$

$n = 1$, $n' = 1$ et $p = 1$.

23. Le procédé selon l'une quelconque des revendications 16 à 21, caractérisé en outre en ce que, dans la formule (VII), R représente un groupe méthyle, X représente $-SR^2$ avec

$$R^2 = -R^4\overset{O}{\overset{\|}{C}}OR^7,$$

$R^1$ représente un groupe méthyle, $X^1$ représente $-SR^2$ avec

$$R^2 = -R^4\overset{O}{\overset{\|}{C}}OR^7,$$

Y représente $-S-$, $a = 1$, $b = 1$, $c = 2$, $d = 1$ et $q = 1$.

24. Le procédé selon l'une quelconque des revendications 16 à 21, caractérisé en outre en ce que, dans la formule (VIII), R représente un groupe méthyle, $R^1$ représente un groupe méthyle, X représente $-SR^2$ avec

$$R^2 = -R^4\overset{O}{\overset{\|}{C}}OR^7,$$

$X^1$ représente $-SR^2$ avec

$$R^2 = -R^4\overset{O}{\overset{\|}{C}}OR^7,$$

Y représente $-S-$, $W = 1$, $x = 0$, $y = 1$ et $z = 1$.

25. Le procédé selon l'une quelconque des revendications 16 à 24, caractérisé en outre en ce que les proportions relatives en poids entre le composé organique de l'étain ou le mélange de composés organiques de l'étain A et le composé organique ou le mélange de composés organiques B sont de 400:1 à 1:199.

26. Le procédé selon la revendication 25, caractérisé en outre en ce que les proportions relatives en poids entre le composé organique de l'étain ou le mélange de composés organiques de l'étain A et le composé organique ou le mélange de composés organiques B sont de 400:1 à 1:100.

27. Le procédé selon la revendication 26, caractérisé en ce que ces proportions relatives en poids sont de 400:1 à 1:20.

28. Le procédé selon l'une quelconque des revendications 16 à 27, caractérisé en outre en ce que les proportions relatives en poids entre le composé organique de l'étain ou le mélange de composés organiques de l'étain A et le mercaptide d'organo-étain ou le mélange de mercaptides d'organo-étain C sont de 99:1 à 1:99.

29. Une procédé pour stabiliser un polymère organique contenant un halogène et normalement sensible aux dégradations provoquées par la chaleur, caractérisé en ce que l'on ajoute audit polymère une quantité stabilisante d'une composition préparée par un procédé selon l'une quelconque des revendications 16 à 23.

30. Une procédé pour former un article manufacturé façonné, consistant à façonner une composition polymère stabilisée préparée par un procédé selon la revendication 29.

**Revendications pour l'Etat contractants: AT**

1. Un procédé pour préparer une composition stabilisante pour un polymère organique contenant un halogène, caractérisé en ce qu'il consiste à mélanger:

(A) un composé organique ou un mélange de composés organiques de l'étain choisis parmi ceux qui répondent aux formules générales:

(I) 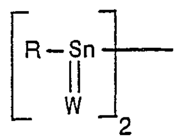

(II) 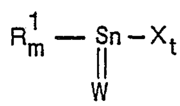 et

(IIa) 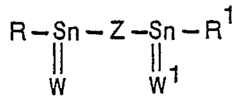

dans lesquelles

W et $W^1$, identiques ou différents, représentent l'oxygène ou le soufre;

X est choisi parmi

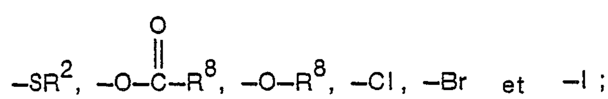

Z représente

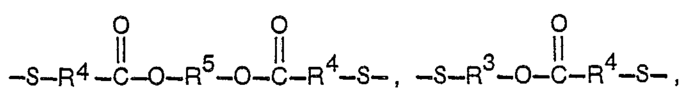

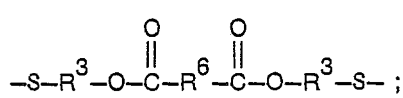

R et $R^1$, identiques ou différents, sont choisis parmi les groupes akyle, aryle, alcényle, aralkyle, alkylaryle, cycloalkyle, cycloalcényle,

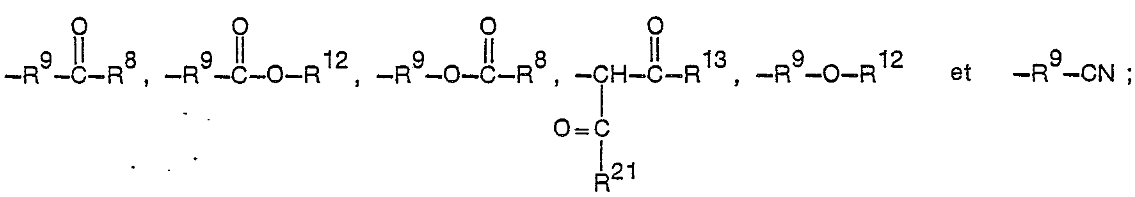

$R^2$ représente un groupe alkyle, alcényle, aryle, aralkyle, cycloalkyle, cycloalcényle,

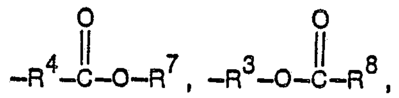

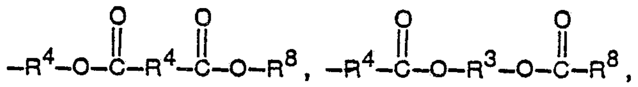, $-R^3-S-R^7$, ou $-R^3-O-R^8$ ;

$R^3$ représente un groupe alkylène à au moins 2 atomes de carbone, arylène, alcénylène à au moins 2 atomes de carbone, cycloalkylène ou cycloalcénylène;

$R^4$ représente un groupe alkylène, arylène, alcénylène à au moins 2 atomes de carbone, cycloalkylène, ou cycloalcénylène;

$R^5$ a la même signification que $R^3$;

$R^6$ représente une liaison simple carbone-carbone ou la même signification que $R^4$;

$R^7$ représente —H ou a la même signification que $R^8$;

$R^8$ représente un groupe alkyle, alcényle, aryle, aralkyle, alkylaryle, cycloalkyle, ou cycloalcényle;

$R^9$ représente un groupe alkylène en $C_1$—$C_4$;

$R^{12}$ représente —H ou un radical hydrocarboné monovalent en $C_1$—$C_{20}$;

$R^{13}$ et $R^{21}$, identiques ou différents, représentent chacun un groupe alkyle en $C_1$—$C_{20}$ ou alcoxy en $C_1$—$C_{20}$; et

m = 1 ou 2 et t = 0 ou 1, avec m + t = 2,

et

(B) un composé organique ou un mélange de composés organiques choisis parmi ceux qui répondent aux formules générales suivantes:

(III) 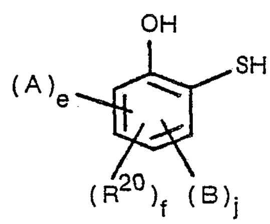 ,

(IV) 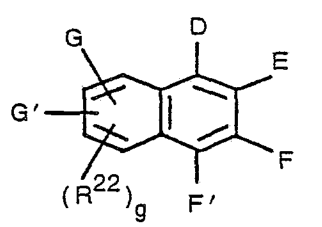 , ou

(V) 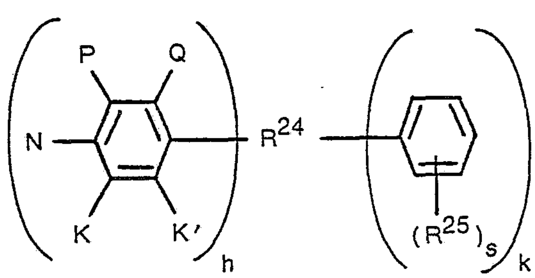

dans lesquelles

A représente —H, —H ou —SH,

B représente —H, —OH ou —SH,

D représente —H, —SH, —OH ou a la même signification que $R^{26}$

E représente —H, —OH, —SH ou a la même signification que $R^{26}$
F représente —H, —SH, —OH ou a la même signification que $R^{26}$
F' représente —H, —OH, —SH ou a la même signification que $R^{26}$
G représente —H, —OH ou —SH
G' représente —H, —SH ou —OH
K représente —H, —SH, —OH ou a la même signification que $R^{23}$
K' représente —H, —OH, —SH ou a la même signification que $R^{23}$
N représente —H, —SH, —OH ou a la même signification que $R^{23}$
P représente —H, —SH, —OH ou a la même signification que $R^{23}$
Q représente —H, —SH, —OH ou a la même signification que $R^{23}$
$R^{20}$ représente —H, un groupe alkyle, aryle, alcényle, alkylaryle, cycloalkyle, alcoxy ou un halogène,
$R^{26}$ représente un groupe alkyle, alcényle ou un halogène
$R^{22}$ représente un groupe alkyle, alcényle ou un halogène
$R^{23}$ représente un groupe alkyle, alcényle ou un halogène
$R^{24}$ représente un groupe alkylène ou alcénylène
$R^{25}$ représente un groupe alkyle, alcényle, un halogène, —SH ou —OH
e est égal à 0, 1 ou 2
j est égal à 0, 1 ou 2
f est égal à 0, 1, 2 ou 3
s est égal à 0, 1, 2 ou 3
g est égal à 0, 1, 2 ou 3
h est égal à 1, 2, 3 ou 4
k est égal à 0, 1, 2 ou 3
$h + k = 2, 3$ ou 4
$e + j + f = 0, 1, 2, 3$ ou 4

étant spécifié que 1) dans la formule (IV), deux des groupes D, E, F et F' doivent consister en un groupe OH et un groupe SH reliés directement à des atomes de carbone cycliques voisins, et 2) dans la formule (V), deux des groupes K, K', N, P et Q doivent consister en un groupe OH et un groupe SH reliés directement à des atomes de carbone cycliques voisins,

avec ou sans,

(C) un mercaptide d'organo-étain ou un mélange de mercaptides d'organo-étain choisis parmi les composés répondant aux formules générales:

(VI) 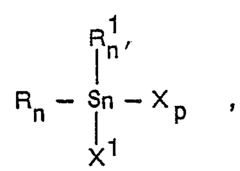 ,

(VII) 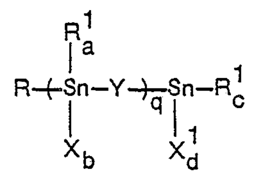 , et

(VIII) 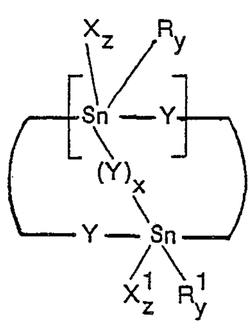

dans lesquelles

X a les significations indiquées ci-dessus et X et $X^1$, identiques ou différents, sont choisis parmi —Cl, —Br, —I, $—SR^2$,

$$-O-\overset{O}{\overset{\|}{C}}-R^8,$$

et $-O-R^8$, étant spécifié que dans la formule (VIII), lorsque z = 1, et dans les formules (VI) et (VII), au moins un des symboles X ou $X^1$ représente $-SR^2$;

Y représente

$$-(S)_v-,\ -W-R^3-W^1-,\ -S-R^4-\overset{O}{\overset{\|}{C}}-O,\ S-R^4-\overset{O}{\overset{\|}{C}}-O-R^5-O-\overset{O}{\overset{\|}{C}}-R^4-S-,$$

$$-S-R^3-O-\overset{O}{\overset{\|}{C}}-R^4-S-,\ -S-R^3-O-\overset{O}{\overset{\|}{C}}-R^6-\overset{O}{\overset{\|}{C}}-O-R^3-S-,\ -O-\overset{O}{\overset{\|}{C}}-R^6-\overset{O}{\overset{\|}{C}}-O-,$$

$$-O-\overset{O}{\overset{\|}{C}}-R^6-\overset{O}{\overset{\|}{C}}-O-R^5-O-\overset{O}{\overset{\|}{C}}-R^6-\overset{O}{\overset{\|}{C}}-O,\ \text{ou}\ -S-\underset{R^{27}}{\underset{|}{CH}}-(\underset{R^{27}}{\underset{|}{CH}})_i-O-\overset{O}{\overset{\|}{C}}-(\underset{R^{27}}{\underset{|}{CH}})_i-;$$

R, $R^1$, $R^2$, $R^3$, $R^4$, $R^5$, $R^6$, $R^8$, W et $W^1$ ont les significations indiquées ci-dessus;

$R^{27}$ représente

$$-\overset{O}{\overset{\|}{C}}-O-R^{16},$$

$$-O-\overset{O}{\overset{\|}{C}}-R^{16},$$

$-OH$, $-SH$, un groupe aryle, alkyle en $C_1-C_{18}$ ou $-H$;

$R^{16}$ représente $-H$ ou a la même signification que $R^8$;

i = 0 ou un nombre de 1 à 6 inclus;

n = 0, 1 ou 2, n' = 0, 1 ou 2 et p = 1 ou 2, avec n + n' = 1 ou 2 et n + n' + p = 3,

a = 0, 1 ou 2, b = 0, 1 ou 2, q = 1 à 5, c = 1, 2 ou 3 et d = 0, 1 ou 2 avec a + b = 2 et c + d = 3;

v est un nombre de 1 à 8 inclus; et

w = 0, 1 ou 2, x = 0 ou 1, y = 1 ou 2, z = 0 ou 1, étant spécifié que lorsque x = 0, y + z = 2, lorsque x = 1, y = 1, z = 0 et w = 1, lorsque w = 2, x = 0 et lorsque w = 0, y + z = 2, x = 0 et Y représente $-W-R^3-W^1$ ou

$$-S-R^4-\overset{O}{\overset{\|}{C}}-O.$$

2. Procédé selon la revendication 1, caractérisé en outre en ce que, dans la formule (I), R représente un groupe méthyle, butyle, ou octyle et W représente le soufre.

3. Le procédé selon la revendication 1, caractérisé en ce que, dans la formule (II), $R^1$ représente un groupe méthyle ou butyle, W représente le soufre, X représente $-SR^2$ avec

$$R^2 = -R^4\overset{O}{\overset{\|}{C}}OR^7,$$

m = 1 et t = 1.

4. Le procédé selon la revendication 1, caractérisé en outre en ce que, dans la formule (IIa), R et $R^1$ représentent des groupes méthyle, butyle, octyle ou

$$-R^9\overset{O}{\overset{\|}{C}}-O-R^{12},$$

W et $W^1$ représentent l'oxygène ou le soufre; et Z représente

$$-S-R^3-O-\overset{O}{\overset{\|}{C}}-R,\ -\overset{O}{\overset{\|}{C}}-O-R^3-S,\ -S-R^3-O-\overset{O}{\overset{\|}{C}}-R^4-S-\ \text{ou}\ -S-R^4-\overset{O}{\overset{\|}{C}}-O-R^5\ -O-\overset{O}{\overset{\|}{C}}-R^4-S-.$$

5. Le procédé selon l'une quelconque des revendications qui précèdent, caractérisé en outre en ce que, dans la formule (III), A est supprimé, B est supprimé $R^{20}$ représente un groupe akyle, e = 0, f = 1 et j = 0.

6. Le procédé selon l'une quelconque des revendications 1 à 4, caractérisé en outre en ce que le composé organique B est l'ortho-hydroxythiophénol.

7. Le procédé selon l'une quelconque des revendications qui précèdent, caractérisé en outre en ce que, dans la formule (VI), R représente un groupe méthyle ou butyle, $R^1$ représente un groupe méthyle ou butyle, X représente —$SR^2$ avec

$$R^2 = -R^4\overset{O}{\overset{\|}{C}}OR^7,$$

$X^1$ représente —$SR^2$ avec

$$R^2 = -R^4\overset{O}{\overset{\|}{C}}OR^7,$$

n = 1, n' = 1 et p = 1.

8. Le procédé selon l'une quelconque des revendications 1 à 6, caractérisé en outre en ce que, dans la formule (VII), R représente un groupe méthyle, X représente —$SR^2$ avec

$$R^2 = -R^4\overset{O}{\overset{\|}{C}}OR^7,$$

$R^1$ représente un groupe méthyle, $X^1$ représente —$SR^2$ avec

$$R^2 = -R^4\overset{O}{\overset{\|}{C}}OR^7,$$

Y représente —S—, a = 1, b = 1, c = 2, d = 1 et q = 1.

9. Le procédé selon l'une quelconque des revendications 1 à 6, caractérisé en outre en ce que, dans la formule (VIII), R représente un groupe méthyle, $R^1$ représente un groupe méthyle, X représente —$SR^2$ avec

$$R^2 = -R^4\overset{O}{\overset{\|}{C}}OR^7,$$

$X^1$ représente —$SR^2$ avec

$$R^2 = -R^4\overset{O}{\overset{\|}{C}}OR^7,$$

Y représente —S—, W = 1, x = 0, y = 1 et z = 1.

10. Le procédé selon l'une quelconque des revendications qui précèdent, caractérisé en outre en ce que les proportions relatives en poids entre le composé organique de l'étain ou le mélange de composés organiques de l'étain A et le composé organique ou le mélange de composés organiques B sont de 400:1 à 1:199.

11. Le procédé selon la revendication 10, caractérisé en outre en ce que les proportions relatives en poids entre le composé organique de l'étain ou le mélange de composés organiques de l'étain A et le composé organique ou le mélange de composés organiques B sont de 400:1 à 1:100.

12. Le procédé selon la revendication 11, caractérisé en ce que ces proportions relatives en poids sont de 400:1 à 1:20.

13. Le procédé selon l'une quelconque des revendications qui précèdent, caractérisé en outre en ce que les proportions relatives en poids entre le composé organique de l'étain ou le mélange de composés organiques de l'étain A et le mercaptide d'organo-étain ou le mélange de mercaptides d'organo-étain C sont de 99:1 à 1:99.

14. Un procédé pour stabiliser un polymère organique contenant un halogène et normalement sensible aux dégradations provoquées par la chaleur, caractérisé en ce que l'on ajoute audit polymère une quantité stabilisante d'une composition selon l'une quelconque des revendications 1 à 13.

15. Un procédé pour former un article manufacturé façonné qui consiste à façonner une composition polymère stabilisée préparée par un procédé selon la revendication 14.

16. Un article manufacturé façonné tel qu'un tube comprenant un polymère organique qui contient un halogène et est normalement sensible aux dégradations provoquées par la chaleur, et caractérisé en ce qu'il contient une quantité stabilisante d'une composition préparée par un procédé selon l'une quelconque des revendications 1 à 13.